# EUROPÄISCHE PATENTSCHRIFT

(11) **EP 3 733 368 B1**
(45) Veröffentlichungstag und Bekanntmachung des Hinweises auf die Patenterteilung: **22.05.2024**
(21) Anmeldenummer: 19171919.4
(22) Anmeldetag: 30.04.2019
(51) Int. Cl.: B27N 3/00, C08L 61/28, C08L 97/02, B27N 1/00

(54) **BINDEMITTEL ZUR HERSTELLUNG VON HOLZWERKSTOFFEN**
ADHESIVE FOR MANUFACTURE OF WOOD BOARDS
LIANT DESTINÉ À LA FABRICATION DE MATÉRIAUX DÉRIVÉ DU BOIS

(43) Veröffentlichungstag der Anmeldung: 04.11.2020
(73) Patentinhaber: Fritz Egger GmbH & Co. OG, 6380 St. Johann in Tirol (AT)
(72) Erfinder: Kuncinger, Thomas, 1200 Wien (AT); Wimmer, Lukas, 3130 Herzogenburg (AT); Kaisergruber, Theresa, 3150 Wilhelmsburg (AT)
(74) Vertreter: Cohausz & Florack

(56) Entgegenhaltungen:
- EP-A2- 0 352 558
- WO-A1-2018/054732
- DE-A1- 2 336 381
- DE-C1- 3 644 397
- DE-C1- 19 603 330

## Beschreibung

### TECHNISCHER BEREICH DER ERFINDUNG

Die Erfindung betrifft eine Bindemittelzusammensetzung und ein Verfahren zur Herstellung von Holzwerkstoffen, sowie damit bzw. dadurch hergestellte Holzwerkstoffe. Ferner betrifft die Erfindung die Verwendung von Ligninsulfonat in einer Bindemittelzusammensetzung als Emulgator und/oder Reaktivphasenvermittler zwischen einer Polyisocyanatphase und einer Phase enthaltend ein oder mehrere isocyanatreaktive Verbindungen. Schließlich umfasst die Erfindung die Verwendung einer Bindemittelzusammensetzung als Flächenleim, sowie die Verwendung einer Bindemittelzusammensetzung zur Reduktion der Formaldehydemissionen durch Holzwerkstoffe.

### HINTERGUND DER ERFINDUNG

Holzwerkstoffe wie Span-, Faser- oder OSB-Platten werden aus lignocellulosehaltigem Material und Bindemittel hergestellt. Als Bindemittel werden häufig formaldehydhaltige Bindemittel eingesetzt, sodass die Holzwerkstoffe nach der Herstellung über lange Zeiträume hinweg Formaldehyd abgeben. Die Ursache der nachträglichen Formaldehydabgabe aus derartig verleimten Holzwerkstoffen liegt zum einen darin, dass nach dem Aushärten des Bindemittels ein Teil des freien Formaldehyds zurück bleibt, welches nachträglich aus den Platten entweicht. Zum anderen liegt die Ursache darin, dass ausgehärtetes Bindemittel und demnach das Reaktionsprodukt unter Einwirkung von Feuchte und Temperatur partiell in seine Ausgangsbestandteile aufgelöst werden kann, was die Freisetzung von Formaldehyd bewirkt. Formaldehyd kann aber auch aus dem lignocellulosehaltigem Material selbst freigesetzt werden. Die Freisetzung von Formaldehyd ist unerwünscht, da Formaldehyd in vielen Ländern zumindest als gesundheitsgefährdend eingestuft ist oder diesbezüglich in Verdacht steht. Daher ist es erstrebenswert Holzspanwerkstoffe mit einem reduzierten Formaldehydemission herzustellen. Dies ist insbesondere im Hinblick auf die Verwendung von Holzwerkstoffen zur Herstellung von Möbelstücken, Wand- und Deckenbekleidungen oder als Bodenbelag wichtig. Ziel der Erfindung ist die Herstellung formaldehydarmer bzw. formaldehydfangender Holzwerkstoffe.

Bei der Herstellung von Holzwerkstoffen kommen aufgrund ihrer Kostengünstigkeit und guten mechanischen Eigenschaften immer noch vorwiegend und in großen Mengen insbesondere aminoplastbasierte Bindemittel, d.h. formaldehydhaltige Harze, zur Anwendung.

Zur Herstellung von beispielsweise Span-, Faser- oder OSB-Platten wird zunächst lignocellulosehaltiges Material in Form von Spänen, Fasern oder Strands bereitgestellt und mit Bindemittel versetzt. Danach folgt die Bildung einer Späne-, Faser- bzw. Strandmatte, die dann durch in Takt- oder kontinuierlich arbeitende Pressen unter Hitze und Druck zu einer Platte gepresst wird. Mehrschichtige Span-, Faser- oder OSB-Platten werden hergestellt, indem mehrere Schichten in Form von Span-, Faser- bzw. Strandmatten übereinander gebildet und anschließend verpresst werden. In der Presse erfolgt die Aushärtung, d.h. die Vernetzung des Bindemittels, wobei - im Falle eines formaldehydhaltigen Bindemittels - stets eine gewisse Menge an Formaldehyd in freier und/oder gebundener Form zurück bleibt. Dieses kann auch noch über mehrere Monate bis wenige Jahre aus dem fertigen Produkt abgegeben werden.

Zusätzlich zu diesen bindemittelbedingten Formaldehydemissionen, kommt es im Zuge der Trocknung und Verarbeitung von lignocellulosehaltigem Material auch zur Abspaltung und Freisetzung von Formaldehyd aus dem lignocellulosehaltigen Material selbst. Durch die Verwendung von formaldehydfreien Bindemitteln ist daher eine Formaldehydemission bei Holzwerkstoffen nicht gänzlich zu vermeiden.

Formaldehyd ist aber in vielen Ländern zumindest als gesundheitsgefährdend eingestuft oder steht in diesbezüglichem Verdacht. Generell ist die Holzwerkstoffindustrie daher bestrebt, nach Lösungen zu suchen, welche das Problem der Formaldehydemissionen weitestgehend reduzieren oder gar vollständig beseitigen.

Ein aus dem Stand der Technik bekanntes Mittel zur Verringerung der Abgabe von Formaldehyd aus einem Holzwerkstoff ist der Einsatz sogenannter Fänger. Diese, wie beispielsweise Harnstoff, reagieren mit dem bei der Pressung bzw. Lagerung entstehenden Formaldehyd und führen dadurch zu einer Absenkung der Formaldehydemission. Wird in einem Aminoplastharz zusätzlicher Harnstoff als Formaldehydfänger eingesetzt, führt dies jedoch zu einer Reduktion des Molverhältnisses des Formaldehyds zu dem NH₂-haltigen Bestandteil und somit auch zu einer Reduktion der Reaktivität, d.h. der Aushärtegeschwindigkeit. Dies zieht eine potentiell niedrigere Pressgeschwindigkeit nach sich. Nachteilig an bekannten Formaldehydfängern ist daher, dass diese bereits in hohem Ausmaß während des Aushärtevorganges (d.h. zu Beginn des Heißpressvorgangs, bei kontinuierlichen Pressen also im vorderen Teil der Presse) mit Formaldehyd reagieren. Dadurch wird die Reaktivität und somit die Pressgeschwindigkeit der Platte verschlechtert, was einen wesentlichen Kostenfaktor darstellt. Hinzu kommt, dass dadurch im Extremfall auch die Festigkeit der hergestellten Platte verschlechtert wird, was einen wesentlichen Qualitätsverlust darstellt.

Ein weiterer Ansatzpunkt zur Reduktion der Formaldehydemission aus dem Stand der Technik ist der Einsatz von formaldehydfreien Bindemitteln. In der Spanplatten- und MDF-Produktion ist derzeit nur Polyisocyanat wie PMDI eine praxisrelevante, formaldehydfreie Alternative. Dieses kann als ausschließliches Bindemittel eingesetzt werden oder auch in Form von Misch- und Kombinationsverleimungen mit anderen Bindemitteln.

Es wurde im Stand der Technik auch schon versucht, PMDI-Harze in Kombination mit Formaldehydfängern zu verwenden. So beschreibt die EP 0 012 169 A1 beispielsweise eine Kombinationsverleimung, in der die Deckschicht mit einem Harnstoff-Formaldehyd-Harz und die Mittelschicht mit einem PMDI-Harz gebunden wird. In die Mittelschicht werden zusätzlich Fängersubstanzen, wie z.B. Harnstoff, eindosiert, was die Formaldehydemission aus der Deckschicht verringern soll.

Unabhängig von etwaigen Effekten auf die Formaldehydemission beschreibt die DE 24 44 002 ein Verfahren zur Herstellung von Spanplatten, bei dem die Späne vor, während oder nach dem Auftrag eines PMDI-basierten Bindemittels mit Harnstoff behandelt werden. Dies soll zu besseren Plattenfestigkeiten führen.

Sowohl in EP 0 012 169 A1 als auch in DE 24 44 002 wird und kann der Harnstoff nicht zusammen mit dem PMDI-basiertem Bindemittel aufgetragen werden, sondern muss getrennt davon zudosiert werden. Dies hat zunächst praktische Gründe. PMDI wird üblicherweise in Reinform eingesetzt und ist eine hochgradig hydrophobe, ölige und viskose Flüssigkeit. Diese ist nicht mit Harnstoff oder einer wässrigen Harnstofflösung mischbar und dadurch schwer mit dieser zusammen zu dosieren. Ein weiterer Grund ist darüber hinaus, dass der Fänger (z.B. Harnstoff) im Stand der Technik eine vom PMDI unterschiedliche, eigenständige Funktion haben soll, nämlich die einer Fängersubstanz. Daher soll der Fänger nicht durch chemische Reaktion mit dem PMDI schon bei der Herstellung der Holzwerkstoffe verbraucht werden. Die separate Dosierung von Fänger und Bindemittel ist jedoch umständlich und erhöht die Komplexität der Handhabung und Zahl der Verfahrensschritte. Aufgrund der Inkompatibilität von polaren Ammoniak-, Ammonium- oder NH₂-Gruppen enthaltenden Fängersubstanzen mit gängigen PMDI-basierten Bindemitteln ist die Auswahl an miteinander mischbaren Fänger-Bindemittel-Partnern und deren Einsatz im Stand der Technik stark begrenzt.

DE3644397C1 offenbart ein Verfahren zur Herstellung von Lignocellulosewerkstoffen enthaltend Herstellung einer Mischung M1 und einer Mischung M2, Streuen der Mischung M1 und der Mischung M2 zu einer Matte, Vorverdichtung der gestreuten Matte und Heißpressen der Matte.

### ZUSAMMENFASSUNG DER ERFINDUNG

Vor diesem Hintergrund und dem voranstehend erläuterten Stand der Technik bestand eine Aufgabe der Erfindung darin, verbesserte formaldehydfreie bzw. formaldehydbindende/formaldehydfangende Bindemittel und Holzwerkstoffe sowie Verfahren zu deren Herstellung bereitzustellen, insbesondere solche, die Polyisocyanate und Formaldehydfänger wirkungsvoll miteinander kombinieren.

Wegen der relativ hohen Kosten von PMDI werden in der Praxis Aminoplastharze oftmals noch den PMDI-basierten Bindemitteln vorgezogen. Es ist daher eine weitere Aufgabe der Erfindung, die Kosten von polyisocyanatbasierten Bindemitteln durch eine Reduktion des darin enthaltenen teuren Polyisocyanats reduzieren zu können.

Insgesamt ist die Aufgabe der Erfindung darin zu sehen, eine kostengünstige, polyisocyanatbasierte Bindemittelzusammensetzung bereitzustellen, mit der es durch ein einfaches und wirtschaftlich effektives Verfahren möglich ist, formaldehydbindende Holzwerkstoffe herzustellen.

Diese Aufgaben werden gelöst durch die Bindemittelzusammensetzung nach Anspruch 1, den Holzwerkstoff nach Anspruch 6, das Verfahren nach Anspruch 12 und die Verwendung nach einem der Ansprüche 16-18

Die erfindungsgemäße polyisocyanatbasierte Bindemittelzusammensetzung ist in Anspruch 1 definiert und enthält, jeweils als Feststoffgewicht bezogen auf das Gesamtfeststoffgewicht der Bindemittelzusammensetzung,
i) 30 bis 95 Gew.-% Polyisocyanat,
ii) 1 bis 50 Gew.-% Ligninsulfonat, und
iii) 1 bis 50 Gew.-% isocyanatreaktive Verbindung

Unter dem Begriff "isocyanatreaktive Verbindung" wird erfindungsgemäß folgendes verstanden:
a) Ammoniak oder eine ammoniakabspaltende Verbindung wie Ammoniumcarbonat
b) eine Verbindung, die mindestens eine NHz-Gruppe und eine weitere mit Isocyanatgruppen reagierende Gruppe im Molekülaufbau enthält, oder
c) eine Mischung von Verbindungen aus a) und/oder b).

Die erfindungsgemäße Bindemittelzusammensetzung ist mit Blick auf den Stand der Technik besonders vorteilhaft, da der kostspielige Polyisocyanatanteil gattungsgemäßer Bindemittelzusammensetzungen durch eine Teilsubstitution mit Ligninsulfonat erniedrigt werden kann. Dabei dient das Ligninsulfonat erfindungsgemäß gleichzeitig noch als Reaktivphasenvermittler und Emulgator, um isocyanatreaktive Verbindungen mit Polyisocyanat zu kompatibilisieren. Die isocyanatreaktiven Verbindungen fungieren als Formaldehydfänger.

Die erfindungsgemäße Bindemittelzusammensetzung erlaubt die Herstellung von Holzwerkstoffen mit hervorragenden formaldehydfangenden bzw. formaldehydbindenden Eigenschaften, wobei der fertige Holzwerkstoff ein Reaktionsprodukt der erfindungsgemäßen Bindemittelzusammensetzungen enthält. Die erfindungsgemäßen Holzwerkstoffe sind insbesondere erhältlich nach den hier beschriebenen erfindungsgemäßen Verfahren, das in Anspruch 12 definiert ist. Diese sind aufgrund des Einsatzes der erfindungsgemäßen Bindemittelzusammensetzung besonders kostengünstig. Das erfindungsgemäße Verfahren ist jedoch auch besonders effektiv, da die erfindungsgemäße Bindemittelzusammensetzung im Wesentlichen einphasig ist und daher die gemeinsame Dosierung von Bindemittel und Formaldehydfängersubstanzen in einem einzigen Verfahrensschritt ermöglicht.

Die Erfindung betrifft ferner auch die Verwendung von Ligninsulfonat als Emulgator und Reaktivphasenvermittler nach Anspruch 16, die Verwendung der erfindungsgemäßen Bindemittelzusammensetzung als Flächenleim zur Veredelung von Holzwerkstoffen nach Anspruch 17 sowie die Verwendung der erfindungsgemäßen Bindemittelzusammensetzungen zur Reduktion von Formaldehydemissionen nach Anspruch 18.

Vorteilhafte Ausgestaltungen der Erfindung sind in den abhängigen Ansprüchen angegeben und werden nachfolgend zusammen mit der allgemeinen erfinderischen Idee im Einzelnen erläutert.

### DETAILLIERTE BESCHREIBUNG DER ERFINDUNG

Die erfindungsgemäße Bindemittelzusammensetzung ist in Anspruch 1 definiert.

Besonders praxisgerechte Ergebnisse stellen sich ein, wenn die Bindemittelzusammensetzung Polyisocyanat, jeweils bezogen auf das Gesamtfeststoffgewicht der Bindemittelzusammensetzung, in einer Menge von 40 bis 85 Gew.-% oder noch bevorzugter 50 bis 75 Gew.-% enthält.

Des Weiteren stellen sich besonders praxisgerechte Ergebnisse ein, jeweils bezogen auf das Gesamtfeststoffgewicht der Bindemittelzusammensetzung, wenn die Bindemittelzusammensetzung Ligninsulfonat, jeweils bezogen auf das Gesamtfeststoffgewicht der Bindemittelzusammensetzung, in einer Menge von 1 bis 40 Gew.-% oder noch bevorzugter 1 bis 35 Gew.-% enthält.

Ferner stellen sich besonders praxisgerechte Ergebnisse ein, wenn die Bindemittelzusammensetzung, jeweils bezogen auf das Gesamtfeststoffgewicht der Bindemittelzusammensetzung, die isocyanatreaktive Verbindung in einer Menge von 5 bis 50 Gew.-% oder noch bevorzugter von 10 bis 50 Gew.-% enthält.

Die vorstehenden oder an anderer Stelle hierin genannten Mengenbereiche für Polyisocyanat, Ligninsulfonat und isocyanatreaktive Verbindung sind beliebig miteinander kombinierbar. Insbesondere sind die Mengenangaben auf der gleichen "Bevorzugungsebene" aufeinander abgestimmt und daher besonders miteinander kombinierbar.

Wenn hier von Gew.-% im Zusammenhang mit der erfindungsgemäßen Bindemittelzusammensetzung die Rede ist, so sind, soweit nichts anderes angegeben ist, die Gew.-% Angaben immer auf den Feststoffanteil der Bindemittelzusammensetzung bezogen, d.h. das Feststoffgewicht eines einzelnen Bestandteils ist bezogen auf das Gesamtfeststoffgewicht der Bindemittelzusammensetzung. Letzteres ergibt sich rechnerisch durch Subtraktion des Lösungsmittelanteils (zumeist Wasser) vom Gesamtgewicht der Bindemittelzusammensetzung. In einer bevorzugten Ausführungsform bedeutet "bezogen auf den Feststoffanteil der Bindemittelzusammensetzung" insbesondere "bezogen auf das Gesamtgewicht (Feststoff) der in der Bindemittelzusammensetzung enthaltenen Bestandteile i) bis iii)", d.h. nur auf die Summe der Feststoffmengen der Bestandteile i) bis iii)".

Alternativ kann die Bindemittelzusammensetzung auch - wie in der Holzwerkstoffindustrie ebenfalls üblich - auf das Trockengewicht des lignocellulosehaltigen Materials bezogen werden, auf welches die Bindemittelzusammensetzung aufgebracht wird. Die Offenbarung stellt daher auch eine Bindemittelzusammensetzung zum Aufbringen auf ein lignocellulosehaltiges Material bereit, welche, bezogen auf das Trockengewicht (z.B. atro Holz) des lignocellulosehaltigen Materials,
i) 1 bis 10 Gew.-% Polyisocyanat,
ii) 0,05 bis 3 Gew.-% Ligninsulfonat, und
iii) 0,05 bis 3 Gew.-% einer isocyanatreaktiven Verbindung enthält.

Besonders praxisgerechte Ergebnisse stellen sich ein, wenn die Bindemittelzusammensetzung, jeweils bezogen auf das Trockengewicht des lignocellulosehaltigen Materials, Polyisocyanat in einer Menge von 1,5 bis 8 Gew.-% oder noch bevorzugter 2,5 bis 6 Gew.-% enthält.

Des Weiteren stellen sich besonders praxisgerechte Ergebnisse ein, wenn die Bindemittelzusammensetzung, jeweils bezogen auf das auf das Trockengewicht des lignocellulosehaltigen Materials, Ligninsulfonat in einer Menge von 0,05 bis 2,5 Gew.-% oder noch bevorzugter 0,05 bis 2 Gew.-% enthält.

Ferner stellen sich besonders praxisgerechte Ergebnisse ein, wenn die Bindemittelzusammensetzung, jeweils bezogen auf das auf das Trockengewicht des lignocellulosehaltigen Materials, die isocyanatreaktive Verbindung in einer Menge von 0,1 bis 3 Gew.-% oder noch bevorzugter von 0,5 bis 3 Gew.-% enthält.

Wenn hier oder nachfolgend numerische Werte angegeben sind, schließen diese Messungenauigkeiten ein und umfassen insbesondere Abweichungen von plus oder minus 2 %.

### Ligninsulfonat

Die erfindungsgemäße Bindemittelzusammensetzung enthält als zentralen neuen und erfinderischen Bestandteil 1-50 Gew.-% Ligninsulfonat, jeweils als Feststoffgewicht bezogen auf das Gesamtfeststoffgewicht der Bindemittelzusammensetzung. Die Erfindung beruht auf der überraschenden Erkenntnis, dass Ligninsulfonat ein hervorragender Emulgator und Reaktivphasenvermittler zwischen Polyisocyanaten wie PMDI und Fängersubstanzen wie Harnstoff ist. Das Ligninsulfonat wird hierin daher auch als erfindungsgemäßer Emulgator und Reaktivphasenvermittler bezeichnet. Die Erfindung betrifft in diesem Sinne auch die Verwendung von Ligninsulfonat als Emulgator und Reaktivphasenvermittler zwischen einem Polyisocyanat und einer isocyanatreaktiven Verbindung. Diese Verwendung betrifft insbesondere die Verwendung von Ligninsulfonat in einer Bindemittelzusammensetzung, vorzugsweise einer Bindemittelzusammensetzung, die zur Herstellung und/oder Veredelung von Holzwerkstoffen geeignet ist.

Ein "Emulgator" im Sinne der Erfindung bewirkt, dass mindestens zwei nicht oder schlecht miteinander mischbare Phasen zu einem fein verteilten Gemisch (einer Dispersion) vermengt und stabilisiert werden. Das erfindungsgemäß eingesetzte Ligninsulfonat emulgiert dabei die ölige, hydrophobe Polyisocyanatphase mit der hydrophilen Phase, welche die isocyanatreaktive Verbindung enthält oder aus ihr besteht.

Das erfindungsgemäß eingesetzte Ligninsulfonat wirkt in der Bindemittelzusammensetzung nicht nur als Emulgator, sondern auch als Reaktivphasenvermittler. Wenn hier von "Reaktivphasenvermittler" die Rede ist, dann ist damit ein Phasenvermittler gemeint, der durch kovalente Reaktionen an der Phasengrenzfläche für eine Kopplung und Kompatibilisierung, und damit einhergehend für eine bessere Phasendurchmischung, von mindestens zwei ursprünglich schlecht oder nicht miteinander mischbaren Phasen sorgt. Der Vorteil einer Reaktivphasenvermittlung bezüglich der erfindungsgemäßen Bindemittelzusammensetzung liegt darin, dass aufgrund der Durchmischung der Polyisocyanatphase und der Phase enthaltend die isocyanatreaktive Verbindung optimale Reaktionsmöglichkeiten zwischen den in den beiden Phasen vorhandenen Reaktionspartnern entstehen, da eine Erhöhung der Phasengrenzfläche, und damit Reaktionsoberfläche, stattgefunden hat.

Ohne an eine bestimmte wissenschaftliche Theorie gebunden sein zu wollen, scheint das Ligninsulfonat zumindest teilweise über freie OH-Gruppen mit den anderen Bestandteilen der Bindemittelzusammensetzung, insbesondere dem Polyisocyanat, zu reagieren, wodurch dieses besser mit den polaren Ammoniak-, Ammonium- oder NH₂-Gruppen enthaltenden isocyanatreaktiven Verbindung mischbar wird. Jedenfalls führt die Anwesenheit des Ligninsulfonats in der erfindungsgemäßen Bindemittelzusammensetzung zu einer erhöhten Mischbarkeit bzw. Emulgierung der Mischung aus Polyisocyanat und isocyanatreaktiver Verbindung. Dies geht bis hin zur - zumindest augenscheinlichen - Einphasigkeit. Die erfindungsgemäße Wirkung setzt bereits bei einer Menge von 1 Gew.-% Ligninsulfonat, bezogen als Feststoffgewicht auf das Gesamtfeststoffgewicht der Bindemittelzusammensetzung.

Die der Erfindung zugrundeliegenden Forschungsergebnisse zeigen ferner, dass durch den Einsatz von Ligninsulfonat die Menge an PMDI um bis zu ca. ein Drittel (abhängig vom Holzwerkstoff um bis zu 25-40%) reduziert werden kann, ohne dass es zu einer Verschlechterung der mechanischen Eigenschaften kommt. Das Ligninsulfonat kann sogar bis zu 50 Gew.-% der Bindemittelzusammensetzung ausmachen. Darüber hinausgehende Ligninsulfonatanteile sind zwar möglich, führen aber in der Regel nicht zu praxisgerechten Ergebnissen.

Die der Erfindung zugrundeliegende Forschung hat gezeigt, dass Ligninsulfonat exzellente emulgierende Eigenschaften für Polyisocyanate wie PMDI besitzt. In Mischungen mit polaren Substanzen wie Wasser, wässrigen Lösungen und/oder den beanspruchten polaren isocyanatreaktiven Verbindungen erhöht dies die Oberfläche zwischen den Reaktionspartnern. Dies führt erfindungsgemäß zu einer höheren Reaktivität und damit verbundenen, kürzeren Presszeiten.

Gemäß einer Ausführungsform liegt die Bindemittelzusammensetzung als Dispersion, insbesondere Emulsion vor. In einer weiteren Ausführungsform liegt die Bindemittelzusammensetzung als fein dispergierte Dispersion vor. Gemäß einer weiteren Ausführungsform liegt die Bindemittelzusammensetzung als Lösung oder im Wesentlichen einphasige Zusammensetzung vor. Im Wesentlich einphasig bedeutet dabei, dass mit dem bloßen Auge keine Phasentrennung feststellbar ist. In der Praxis kann es sich dabei nichtsdestotrotz um mikroskopisch fein dispergierte Emulsion bzw. Dispersion handeln.

Die Reaktivität von Polyisocyanaten mit Wasser oder wässrigen bzw. hydrophilen Reaktionspartnern wird maßgeblich durch die Phasengrenzfläche und Temperatur beeinflusst. Polyisocyanate haben üblicherweise ein Molekulargewicht von 200-10000 g/mol. Sie sind ölige, stark hydrophobe Flüssigkeiten, die sich sehr schlecht mit Wasser mischen. Bei Raumtemperatur tritt eine Reaktion lediglich sehr langsam und nur an der Grenzfläche zwischen der hydrophoben Polyisocyanatphase und der wässrigen/hydrophilen Co-Reaktandenphase auf. Die erfindungsgemäße Wirkweise des Ligninsulfonats als Reaktivphasenvermittler und Emulgator für das Polyisocyanat führt zu einer Dispergierung der Polyisocyanatphase und damit einer starken Erhöhung der Phasengrenzfläche bis hin zum Idealfall der Einphasigkeit bzw. fein dispergierten Dispersion oder fein dispergierten Emulsion.

Die Reaktion und Aushärtung des PMDI-Harzes, d.h. die Reaktion zwischen Polyisocyanat und den erfindungsgemäßen isocyanatreaktiven Verbindungen sowie ggf. Wasser, beginnt erfindungsgemäß durch die Anwesenheit von Ligninsulfonat früher. Beim erfindungsgemäßen Mischen von Polyisocyanat und der isocyanatreaktiven Verbindung mit Ligninsulfonat beginnt die Reaktion schon bei Raumtemperatur langsam und läuft bei 30-40°C merklich ab. Im Gegensatz hierzu reagiert nichtemulgiertes Polyisocyanat mit Wasser oder anderen isocyanatreaktiven Verbindungen wie Harnstoff bei Raumtemperatur über Tage nicht merklich und nur an der Grenzfläche. Des Weiteren kommt es bei der Herstellung eines Standard-PMDI Harzes, d.h. ohne Verwendung eines speziellen Emulgators, erst bei sehr hohen Temperaturen (z.B. ca. 95° C) zu einer merklichen Reaktion des PMDI mit Wasser und damit verbundener Polymerisation.

Mischungen von PMDI mit polaren Co-Reaktanden, wie von PMDI mit den erfindungsgemäßen isocyanatreaktiven Verbindungen, werden in der Praxis wegen der fehlenden Mischbarkeit zumeist erst gar nicht eingesetzt. Die erfindungsgemäß erzielbare höhere Reaktivität der Bindemittelzusammensetzung durch den Einsatz von Ligninsulfonat als Emulgator und Reaktivphasenvermittler kann zur Reduktion der Presszeiten, der Presstemperaturen und/oder zur Reduktion der Menge an PMDI genutzt werden.

Die Zumischung von Ligninsulfonat überführt die ansonsten nicht gut mischbare Bindemittelzusammensetzung aus Polyisocyanat und erfindungsgemäßer isocyanatreaktiver Verbindung in eine im Wesentlichen einphasige Zusammensetzung bzw. mikroskopisch fein dispergierte Dispersion. Dispersionen bzw. disperse Systeme sind dem Fachmann grundsätzlich bekannt (vgl. "Pharmazeutische Technologie", Voigt, Deutscher Apotheker Verlag Stuttgart, 2000, S. 81 ff). "Dispersion" bezeichnet ein System aus mindestens zwei Phasen, von denen mindestens eine Phase eine kontinuierliche Phase, ein sogenanntes Dispersionsmittel, und mindestens eine weitere darin verteilte Phase, eine sogenannte disperse oder dispergierte Phase oder Dispergens, ist (vgl. auch DIN EN ISO 862:1995-10). Die kontinuierliche Phase kann flüssig, fest oder in einer Mischung daraus vorliegen. Erfindungsgemäß ist die kontinuierliche Phase flüssig oder flüssig-fest. Wenn hier oder an anderer Stelle von "flüssig" die Rede ist, dann sind damit bei Raumtemperatur (25 °C) und Normaldruck (1 atm) flüssige Lösungen und/oder Dispersionen gemeint. Wenn nicht anders angegeben, sind alle hier genannten Werte bei Normaldruck (1 atm) gemessen. Die disperse Phase kann flüssig, fest oder in einer Mischung daraus (d.h. flüssig-fest) vorliegen. Vorzugsweise ist auch die disperse Phase flüssig oder flüssig-fest. Üblicherweise handelt es sich bei der erfindungsgemäßen Bindemittelzusammensetzung um eine fein dispergierte Emulsion.

Die disperse Phase liegt dabei erfindungsgemäß fein dispergiert in der kontinuierlichen Phase vor. Wenn hier von "fein dispergiert" die Rede ist, dann ist damit eine kolloidal disperse Verteilung (Partikeldurchmesser der dispersen Phase durchschnittlich 1 nm bis 1 µm) und/oder eine grob disperse Verteilung (Partikeldurchmesser der dispersen Phase durchschnittlich größer als 1 µm) der Partikel der dispersen Phase gemeint. Dem Fachmann sind verschiedene Definitionen von "Partikeldurchmesser" und Verfahren zur Bestimmung des Partikeldurchmessers bekannt (vgl. "Pharmazeutische Technologie", Voigt, Deutscher Apotheker Verlag Stuttgart, 2000, S. 29 ff). Wenn hier von "Partikeldurchmesser" die Rede ist, dann wird hierunter der durchschnittliche Durchmesser des flächengleichen Kreises verstanden.

Gemäß einer Ausführungsform ist die Bindemittelzusammensetzung eine Emulsion. Üblicherweise enthält eine Emulsion mindestens zwei nicht miteinander mischbare flüssige Phasen. Dem Fachmann sind Emulsionen bekannt (vgl. "Pharmazeutische Technologie", Voigt, Deutscher Apotheker Verlag Stuttgart, 2000, S. 343 ff). Grundsätzlich unterscheidet der Fachmann die Phasen der Emulsion in eine sogenannte "ölige" und eine "wässrige" Phase. Wenn hier oder anderer Stelle von "öliger Phase" die Rede ist, dann ist damit grundsätzlich eine lipophile Phase gemeint, die Polyisocyanat enthält. Wenn hier oder anderer Stelle von "wässriger Phase" die Rede ist, dann ist damit grundsätzlich eine hydrophile Phase gemeint, die Wasser und Ligninsulfonat sowie ggf. die isocyanatreaktive Verbindung enthält. In einer Ausführungsform ist die Emulsion eine Öl-in-Wasser-Emulsion. Unter einer Öl-in-Wasser-Emulsion versteht der Fachmann eine Emulsion, bei der die ölige Phase in die wässrige Phase dispergiert ist. In dieser Ausführungsform enthält die kontinuierliche Phase die wässrige Phase und die ölige Phase enthält Polyisocyanat.

Überraschenderweise können die erfindungsgemäßen Fängersubstanzen auch dann noch wirkungsvoll Formaldehyd binden, wenn sie durch den erfindungsgemäßen Reaktivphasenvermittler (d.h. das Ligninsulfonat) in Bezug auf das PMDI-Harz kompatibilisiert vorliegen, sich mit diesem mischen und/oder in dieses einpolymerisieren.

Wie eingangs bei der Beschreibung des Standes der Technik erläutert, war es vor der Fertigstellung der Erfindung aufgrund der vorhandenen Inkompatibilität nicht möglich, PMDI zusammen mit NHz-Gruppen- oder ammoniakhaltigen/ammoniakabspaltenden isocyanatreaktiven Verbindungen in einer Bindemittelzusammensetzung praxisgerecht, d.h. insbesondere in Form einer einzelnen Mischung, einzusetzen. Zumindest nicht in einer derart kostengünstigen, effektiven und umweltverträglichen Art und Weise wie es die Erfindung ermöglicht.

Der erfindungsgemäße Einsatz von Ligninsulfonat ist auch deswegen so vorteilhaft, weil damit ein erdölbasierter Rohstoff (PMDI) durch einen aus nachwachsenden Rohstoffen gewonnenen und als Abfallprodukt anfallenden Rohstoff (Ligninsulfonat) ersetzt wird. Ligninsulfonat fällt in großen Mengen als wässriges Abfallprodukt bei der Zellstoffherstellung nach dem Sulfitverfahren an. Deshalb besteht grundsätzlich ein großes Interesse an Verwertungsmöglichkeiten.

Das Sulfitverfahren ist ein großtechnisch angewandter chemisch-industrieller Prozess zur Gewinnung von Cellulose aus Holz. Beim Sulfitverfahren kann, je nach verwendetem Kation (Calcium, Magnesium, Natrium, Ammonium), das Holz im sauren oder auch neutralen Milieu aufgeschlossen werden (Holzaufschluss). Im Prozess wird das Lignin unter Molekülverkleinerung einer Sulfonierung unterworfen und wird dabei in ein wasserlösliches Salz der Ligninsulfonsäure überführt, welches leicht aus der Faser entfernt werden kann. Wasserlösliche Salze der Ligninsulfonsäure werden als Ligninsulfonat bezeichnet. Je nach pH-Wert werden die im Holz vorhandenen Hemicellulosen entweder durch saure Hydrolyse in Zucker umgewandelt und gehen in die wässrige Phase über oder sie verbleiben mit der Cellulose in der Faser. Die so hergestellten Zellstoffe werden zur Papierherstellung verwendet. Rund 15 % des in Deutschland verbrauchten Zellstoffs werden im Sulfitverfahren gewonnen. Ligninsulfonat fällt in großen Mengen als Nebenprodukt an, welches bei fehlender Verwendungsmöglichkeit verbrannt werden muss.

Im Stand der Technik wurde bereits zahlreich vorgeschlagen, Lignin und Ligninsulfonat als Bindemittel zu verwenden. Nachteilig ist jedoch die auch im Stand der Technik bemängelte niedrige Reaktivität aufgrund der niedrigen Anzahl an reaktiven Stellen im Molekül. Es existiert zwar ein ausgeprägtes Schrifttum zu Einsatzmöglichkeiten von Lignin und Ligninsulfonat, tatsächlich realisierbare und in der Praxis realisierte Einsatzmöglichkeiten für Ligninsulfonat in der Holzwerkstoffindustrie sind jedoch überraschend selten (siehe z.B. Dunky, Niemz "Holzwerkstoffe und Leime", Springer Verlag 2002, Teil I, S. 412-414). Meistens ist eine oxidative Aktivierung des phenolischen Rings im Ligninmolekül (chemisch oder enzymatisch) erforderlich.

Chemisch gesehen ist Ligninsulfonat ein wasserlösliches Polyphenol. Ligninsulfonat kann in komplexierter Form mit Calcium, Magnesium, Ammonium und/oder Natrium vorliegen. Ligninsulfonate haben eine sehr breite Molmassenverteilung von 1000 bis 140000 g/mol. Die mittlere molare Masse des Ligninsulfonats ist abhängig von dem zur Herstellung eingesetzten Holz (Nadelholz, Laubholz) und vom Herstellungsprozess selbst. Die Ligninsulfonate sind leicht löslich in Wasser. Auch mit hohem Molekulargewicht sind sie wasserlöslich.

Lignin wird im Sulfitverfahren durch Sulfonierung in wasserlösliches Ligninsulfonat überführt. Über die zahlreichen noch vorhandenen freien OH-Gruppen kann es mit Polyisocyanat reagieren und dieses über die ebenfalls vorhandenen Sulfonatgruppen in Bezug auf wässrige oder polare Phasen kompatibilisieren. Dies erklärt vermutlich die hervorragenden emulgierenden Eigenschaften von Ligninsulfonat auf Polyisocyanate wie PMDI. Diese werden besonders in Kombination mit den erfindungsgemäß eingesetzten isocyanatreaktiven Verbindungen deutlich.

Im Stand der Technik wurde der Einsatz von Ligninsulfonat bislang nur vereinzelt in Kombination mit PMDI-Harzen beschrieben. Hier ging es jedoch nicht um das der Erfindung zugrundeliegende Problem der Reduktion von Formaldehydemissionen oder den Einsatz von Ligninsulfonat als Phasenvermittler oder Emulgator in PMDI-Mischharzen.

Aus der US 4,279,788 sind beispielsweise Bindemittel für Holzwerkstoffe bekannt, die Polyisocyanat in einer Menge von 20-95 Gew.-%, bevorzugt 50-80 Gew.-% und ligninhaltige Calcium-, Ammonium- oder Natriumsulfitablauge in einer Menge von 5-80 Gew.-%, bevorzugt 20-50 Gew.-%, enthalten. Die US 4,279,788 erwähnt am Ende von Beispiel 27, dass bei der Faserplattenherstellung etwa ein Drittel des Polyisocyanatbindemittels durch Sulfitablauge ersetzt werden kann. In Beispiel 28 der US 4,279,788 wird Calcium-Sulfitablauge mit einer Präpolymeremulsion vermischt, die MDI, 50 % Polyvinylalkohol und 5 % cellulosischen Füllstoff enthält. Die daraus resultierende Bindemittelzusammensetzung weist einen Feststoffgehalt an Lignin von 25 % auf. Das Problem der Reduktion von Formaldehydemissionen oder der Einsatz von Fängersubstanzen, wie beispielsweise der beanspruchten Ammoniak-, Ammonium- oder NH₂-Gruppen enthaltende isocyanatreaktiven Verbindungen und damit einhergehende Problem der Inkompatibilität, wird in US 4,279,788 nicht angesprochen.

Die US 6,524,652 B2 betrifft lagerstabile isocyanatbasierte Bindemittel für Holzwerkstoffe. Diese Bindemittel können gemäß der US 6,524,652 B2 mit diversen zusätzlichen Bindemitteln gemischt werden, u.a. wird auch ligninsulfonatenthaltende Sulfitablauge genannt (siehe Sp. 4, Z. 19-34). Das Mischungsverhältnis isocyanatbasiertes Bindemittel zu zusätzlichem Bindemittel kann in weiten Bereichen variieren: von 1:10 bis 10:1 oder bevorzugt 1:5 bis 5:1. Die US 6,524,652 B2 listet Ligninsulfonat lediglich als mögliches zusätzliches Bindemittel in einer langen Liste auf. Das Problem der Reduktion von Formaldehydemissionen oder der Einsatz von Ligninsulfonat als Emulgator oder Reaktivphasenvermittler zur Kompatibilisierung von PMDI im Hinblick auf die Beimischung von Fängersubstanzen wird in US 4,279,788 nicht angesprochen.

Die DE 36 44 397 C1 betrifft Bindemittel für Holzwerkstoffe, bei deren Herstellung ligninartige Abfallstoffe aus der Zellstoffherstellung (z.B. Sulfitablaugen) mit phenoloxidierenden Enzymen umgesetzt und mit einem Kunstharz als zusätzlichen Bindemittelbestandteil gemischt werden. Das Kunstharz kann ausgewählt sein aus Isocyanat-, Harnstoff-Formaldehyd- oder Melamin-Formaldehyd-Harz. Es soll in der Bindemittelzusammensetzung in einer Menge von lediglich etwa 1-15 Gew.-%, bevorzugt 3-8 Gew.-%, bezogen auf den Gesamtfeststoffgehalt der Bindemittelzusammensetzung eingesetzt werden. In Beispiel 2 von DE 36 44 397 C1, wird PMDI als Kunstharz einsetzt, jedoch lediglich in sehr geringen Mengen (4,5 Gew.-% bezogen auf das Gesamtfeststoffgewicht der Bindemittelzusammensetzung). Weit über 90 Gew.-% der Bindemittelzusammensetzung bestehen aus Enzymkonzentrat und Ca-Sulfitablauge. Die Zugabe phenoloxidierender Enzyme aktiviert und kondensiert die Ligninsulfonate. In dem enzymatisch katalysierten Vorgang entstehen mesomere freie Radikale, die untereinander zu einem hochmolekularen, amorphen Dehydrierungspolymerisat polymerisieren. Gemäß DE 36 44 397 C1 soll eine alleinige Verwendung von Sulfitablauge und Isocyanat, d.h. ohne Enzymbeimischung, nicht zu zufriedenstellenden Platteneigenschaften führen. Damit hergestellte Platten sollen eine starke Quellung aufweisen.

Im Gegensatz zum Stand der Technik der DE 36 44 397 C1 erlaubt die spezielle Bindemittelzusammensetzung der Erfindung den Einsatz von Ligninsulfonat ohne Zugabe von phenoloxidierenden Enzymen. In einer Ausführungsform der Erfindung weist die Bindemittelzusammensetzung keine Enzyme auf. In einer weiteren Ausführungsform weist die Bindemittelzusammensetzung keine phenoloxidierenden Enzyme auf. Die Erfinder haben herausgefunden, dass es durch die Anwesenheit aller im Anspruch genannten Bestandteile (insbesondere durch die erfindungsgemäßen isocyanatreaktiven Verbindungen) und unter Einhaltung der beanspruchten Gewichtsprozentbereiche der Bindemittelbestandteile möglich ist, Holzwerkstoffe mit hervorragenden mechanischen Eigenschaften herzustellen, selbst wenn ein Großteil des klassischen polyisocyanatbasierten Bindemittels (z.B. PMDI) durch Ligninsulfonat ersetzt wird.

Erfindungsgemäß enthält die Bindemittelzusammensetzung, jeweils als Feststoffgewicht bezogen auf das Gesamtfeststoffgewicht der Bindemittelzusammensetzung, 1 bis 50 Gew.-% Ligninsulfonat. Besonders praxisgerechte Ergebnisse stellen sich ein, wenn die Bindemittelzusammensetzung Ligninsulfonat, jeweils als Feststoffgewicht bezogen auf das Gesamtfeststoffgewicht der Bindemittelzusammensetzung, in einer Menge von 5 bis 40 Gew.-% oder noch bevorzugter 10 bis 30 Gew.-% enthält.

Das Ligninsulfonat kann in Form der kommerziell erhältlichen wässrigen Ligninsulfonatzusammensetzungen eingesetzt werden. Diese enthalten meist aufgrund ihrer Entstehung im Sulfitprozess einen Feststoffanteil Ligninsulfonat von etwa 10 bis 12 Gew.-% in wässriger Lösung. In der erfindungsgemäßen Bindemittelzusammensetzung können jedoch auch verdünntere oder konzentriertere Ligninsulfonatzubereitungen oder Ligninsulfonat als Feststoff eingesetzt werden.

Bevorzugt wird das Ligninsulfonat in Form einer wässrigen Zusammensetzung, insbesondere einer wässrigen Suspension eingesetzt. Dies hat zum einen den Vorteil, dass das Ligninsulfonat direkt so eingesetzt werden kann, wie es im Sulfitprozess anfällt. Darüber hinaus kann hierdurch auch direkt das Wasser bereitgestellt werden, welches Polyisocyanate zur Reaktion mit sich selbst benötigen. Bevorzugt wird das Ligninsulfonat in Form einer wässrigen Zusammensetzung eingesetzt, die Ligninsulfonat in einer Menge von 1 bis 57 Gew.-%, noch bevorzugter 5 bis 20 Gew.-% bzw. 8 bis 15 Gew.-%, jeweils bezogen auf das Gesamtgewicht der Ligninsulfonat-Zusammensetzung, enthält.

Der pH-Wert des eingesetzten Ligninsulfonats kann in weiten Bereichen variieren, je nach Art des Sulfitverfahrens, aus dem es stammt. So ist ein pH-Wert von 1 bis 13 möglich. Die Bindemittelzusammensetzung kann einen pH-Wert von 4 bis 8, bevorzugt von 5 bis 7 aufweisen.

In einer Ausführungsform handelt es sich bei dem Ligninsulfonat um Calcium-Ligninsulfonat. In einer anderen Ausführungsform handelt es sich bei dem Ligninsulfonat um Magnesium-Ligninsulfonat. In einer weiteren Ausführungsform handelt es sich bei dem Ligninsulfonat um Ammonium-Ligninsulfonat. Es können auch Mischungen dieser drei Ligninsulfonat-Typen eingesetzt werden.

### Polyisocyanat

Die erfindungsgemäße Bindemittelzusammensetzung enthält, jeweils als Feststoffgewicht bezogen auf das Gesamtfeststoffgewicht der Bindemittelzusammensetzung, 30 bis 95 Gew.-% Polyisocyanat. Besonders praxisgerechte Ergebnisse stellen sich ein, wenn die Bindemittelzusammensetzung Polyisocyanat, jeweils als Feststoffgewicht bezogen auf das Gesamtfeststoffgewicht der Bindemittelzusammensetzung, in einer Menge von 40 bis 85 Gew.-% oder noch bevorzugter 50 bis 75 Gew.-% enthält.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht. Vorzugsweise ist R ein aromatischer Rest oder umfasst R einen aromatischen Rest.

Polyisocyanate reagieren wegen der Mehrfachfunktionalität (≥ 2 Isocyanatgruppen) in Abhängigkeit von Reaktionsbedingungen und -partnern zu einer Vielzahl von Polymeren (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur).

Wenn hier allgemein von "Polyisocyanaten" die Rede ist, so sind damit monomere und/oder oligomere Polyisocyanate gleichermaßen gemeint. Vorzugsweise ist das Polyisocyanat ein aromatisches Polyisocyanat. Besonders praxisgerechte Ergebnisse stellen sich ein, wenn das Polyisocyanat ausgewählt ist aus der Gruppe bestehend aus Diphenylmethandiisocyanat (MDI) und polymeren Diphenylmethandiisocyanat (PMDI). Besonders gute Ergebnisse lassen sich mit PMDI als Polyisocyanat erzielen.

Polymeres Diphenylmethandiisocyanat (PMDI) auch "technisches MDI" genannt, ist ein Stoffgemisch aus MDI (in Form seiner Isomere 4,4`-, 2,4'- und 2,2`-MDI) und homologen längerkettigen aromatischen Polyisocyanaten. Die Bezeichnung "polymeres Diphenylmethandiisocyanat" ist fachlich nicht ganz richtig, da es sich nicht um ein Polymer, sondern um ein Stoffgemisch aus Verbindungen mit mehreren (typischerweise bis 6) Phenylengruppen handelt, die je eine Isocyanatgruppe tragen. Häufige Handelsbezeichnung ist auch Polymethylenpolyphenylisocyanat.

PMDI wird seit mehr als 30 Jahren erfolgreich als Bindemittel in Holzwerkstoffplatten, insbesondere bei OSB-Platten eingesetzt und ist ein Ausgangsstoff zur Herstellung von Isocyanat- und Polyurethanbindemitteln (siehe z.B. Dunky, Niemz "Holzwerkstoffe und Leime", Springer Verlag 2002, Teil I, S. 385-394). Reines PMDI zeichnet sich vor allem durch ein sehr gutes Benetzungsverhalten von Holzoberflächen im Vergleich zu aminoplastbasierten wässrigen Bindemitteln aus. So sind bei PMDI bereits Beleimgrade von 3-4 Gew.-% Feststoff bezogen auf atro Holz ausreichend, während aminoplastbasierte Bindemittel üblicherweise erst bei Beleimgraden von 8-10 Gew.-% Feststoff bezogen auf atro Holz zufriedenstellende Ergebnisse liefern.

Polyisocyanate zeichnen sich durch ihre hohe Reaktivität gegenüber allen Verbindungen aus, die aktiven Wasserstoff enthalten. Eine wesentliche Härtungsreaktion verläuft mit Wasser zur Amidbindung unter gleichzeitiger Abspaltung von COz. Das Amid kann mit weiteren Isocyanatgruppen u.a. zu Polyharnstoffstrukturen weiterreagieren. Die Härtung von reinen PMDI Harzen benötigt daher Wasser, welches entweder getrennt oder gemeinsam mit dem PMDI aufgebracht wird (Besprühung des lignocellulosehaltigen Materials mit einer wässrigen PMDI-Dispersion) oder im Holz in ausreichender Menge als Feuchtigkeit vorliegt.

Ähnlich können auch Co-Bindemittel mit freien OH- oder NH₂-Gruppen in das Isocyanatharz durch Ausbildung von Polyurethan- bzw. Polyharnstoffstrukturen einpolymerisieren.

Die erfindungsgemäß eingesetzten isocyanatreaktiven Verbindungen können in Form von Ammoniak oder über NH₂-Gruppen mit dem Polyisocyanat reagieren und damit in das sich bildende Isocyanatharz einpolymerisieren.

### Isocyanatreaktive Verbindung

Die erfindungsgemäße Bindemittelzusammensetzung enthält, jeweils als Feststoffgewicht bezogen auf das Gesamtfeststoffgewicht der Bindemittelzusammensetzung, 1 bis 50 Gew.-% isocyanatreaktive Verbindung. Besonders praxisgerechte Ergebnisse stellen sich ein, wenn die Bindemittelzusammensetzung die isocyanatreaktive Verbindung, jeweils als Feststoffgewicht bezogen auf das Gesamtfeststoffgewicht der Bindemittelzusammensetzung, in einer Menge von 5 bis 45 Gew.-% oder noch bevorzugter 10 bis 40 Gew.-% enthält.

Die isocyanatreaktive Verbindung kann gemäß Ausführungsform a) Ammoniak oder eine ammoniakabspaltende Verbindung wie Ammoniumcarbonat oder Mischungen solcher Verbindungen sein. Ammoniak addiert leicht an Polyisocyanate unter Ausbildung von Harnstoffderivaten, die sich mit weiteren Isocyanatgruppen vernetzen können.

Die isocyanatreaktive Verbindung kann ferner gemäß Ausführungsform b) eine oder mehrere verschiedene Verbindungen sein, die mindestens eine NH₂-Gruppe und eine weitere mit Isocyanatgruppen reagierende Gruppe im Molekülaufbau enthält. Der NH₂-Gruppe kommt dabei üblicherweise die Funktion des Formaldehydfängers zu. Die weitere mit Isocyanatgruppen reagierende Gruppe im Molekülaufbau kann ebenfalls eine NH₂-Gruppe sein. Sie kann jedoch auch eine Säure-, OH-, Harnstoff- oder Thioharnstoffgruppe sein. So kann die isocyanatreaktive Verbindung ausgewählt sein aus der Gruppe bestehend aus Polyaminen, Aminoalkoholen, Aminosäuren, Polypeptiden, Dicyandiamid, Harnstoff, Thioharnstoff und Melamin.

Es ist gemäß Ausführungsform c) auch eine Mischung von unterschiedlichen isocyanatreaktiven Verbindungen aus Ausführungsform a) möglich, eine Mischung von unterschiedlichen isocyanatreaktiven Verbindungen aus Ausführungsform b) oder eine Mischung unterschiedlicher isocyanatreaktiver Verbindungen aus a) und b). Eine Mischung unterschiedlicher isocyanatreaktiver Verbindungen aus a) und b) kann daher Ammoniak und/oder eine ammoniakabspaltende Verbindung enthalten sowie Verbindungen mit mindestens einer NH₂-Gruppe und einer weiteren mit Isocyanatgruppen reagierenden Gruppe.

Die erfindungsgemäß eingesetzten isocyanatreaktiven Verbindungen sind Formaldehydfänger, die gleichzeitig auch eine mit Isocyanatgruppen-reagierende Gruppe im Molekülaufbau enthalten. Sie reagieren in der erfindungsgemäßen Bindemittelzusammensetzung und/oder in daraus hergestellten Holzwerkstoffen über Ammoniak oder NH₂-Gruppen nicht nur mit Isocyanatgruppen im Polyisocyanat, sondern auch mit im Holzwerkstoff, im Bindemittel oder der Umgebung vorkommenden oder entstehendem Formaldehyd. Ihr Einsatz führt daher zu einer Reduktion der Formaldehydemission durch die Bindung von vorhandenem oder entstehendem Formaldehyd. Der Begriff Formaldehydfängersubstanz wird hierin synonym mit "Fänger", "Fängersubstanzen" oder "Formaldehydfänger" verwendet. Damit ist insbesondere die erfindungsgemäß vorgesehene Liste an isocyanatreaktiven Verbindungen gemeint.

Überraschenderweise erlaubt die erfindungsgemäße Bindemittelzusammensetzung die Einpolymerisation der isocyanatreaktiven Verbindungen in das Isocyanatharz bei Beibehaltung der Fängereigenschaft. Die für die Fängereigenschaft verantwortliche Gruppe kann die gleiche sein, wie die mit Isocyanatgruppen-reagierende Gruppe im Molekülaufbau. So enthält die isocyanatreaktive Verbindung in einer bevorzugten Ausführungsform mindestens zwei NH₂-Gruppen und stellt damit ein Polyamin dar. Besonders gute Ergebnisse haben sich eingestellt, wenn die isocyanatreaktive Verbindung Harnstoff oder Melamin, insbesondere Harnstoff, ist.

Der erfindungsgemäße Einsatz von Ligninsulfonat erlaubt aufgrund dessen überraschend starken emulgierenden Eigenschaften die Verwendung wasserlöslicher isocyanatreaktiver Verbindungen in Kombination mit Polyisocyanaten, welche üblicherweise nicht oder schlecht wasserlöslich sind. Gemäß einer Ausführungsform der Erfindung ist die isocyanatreaktive Verbindung bis zu einer Konzentration von zumindest 10 Gew.-% unter Standardbedingungen (bei 25°C und 1 atm) wasserlöslich. Dies ist für die meisten hier beschriebenen isocyanatreaktiven Verbindungen ohnehin der Fall.

### Weitere Bestandteile

Die erfindungsgemäße Bindemittelzusammensetzung kann neben den Bestandteilen i) bis iii) weitere Bestandteile enthalten.

Ein üblicherweise vorhandener weiterer Bestandteil der erfindungsgemäßen Bindemittelzusammensetzung ist Wasser. Dieses ist typischerweise in Mengen von mindestens 5 Gew.-%, bevorzugt mindestens 10 Gew.-%, bezogen auf das Gesamtgewicht der Bindemittelzusammensetzung, enthalten. Praxisgerechte Ergebnisse stellen sich ein, wenn die Bindemittelzusammensetzung 10 bis 35 Gew.-% Wasser, insbesondere 15 bis 30 Gew.-% Wasser, jeweils bezogen auf das Gesamtgewicht der Bindemittelzusammensetzung, enthält.

Es ist jedoch auch möglich, dass die Bindemittelzusammensetzung weitere Stoffe enthält. Beispielsweise können Netz- und/oder Trennmittel für einen verbesserten Pressvorgang zugesetzt werden. Weiterhin können Pilzschutzmittel, Hydrophobiermittel, Farbstoffe, Feuerschutzmittel und/oder Füllstoffe zugesetzt werden.

### Verfahren

Die Erfindung stellt ein Verfahren zur Herstellung eines Holzwerkstoffs, umfassend mindestens die folgenden Schritte:

| | | |
|---|---|---|
| A.1 | Bereitstellen von lignocellulosehaltigem Material; | |
| B.1 | Aufbringen einer Bindemittelzusammensetzung nach einem der Ansprüche 1 bis 5 auf das lignocellulosehaltige Material; oder | |
| B.2 | Aufbringen der folgenden Bestandteile einer | |
| | Bindemittelzusammensetzung auf das lignocellulosehaltige Material, wobei die Gew.-%-Angaben der Bestandteile i), ii) und iii) bezogen sind auf das Trockengewicht des lignocellulosehaltigen Materials aus Schritt A.1: | |
| | i) 1 bis 10 Gew.-% Polyisocyanat, | |
| | ii) 0,05 bis 3 Gew.-% Ligninsulfonat, und | |
| | iii) 0,05 bis 3 Gew.-% einer isocyanatreaktiven Verbindung, die | |
| | | a) Ammoniak oder eine ammoniakabspaltende Verbindung wie Ammoniumcarbonat ist, oder |
| | | b) mindestens eine NH₂-Gruppe und eine weitere mit Isocyanatgruppen reagierende Gruppe im Molekülaufbau enthält, oder |
| | | c) eine Mischung von Verbindungen aus a) und/oder b) ist; |
| C.1 | Verpressen der Mischung aus Schritt B.1) oder B.2) zu einem Holzwerkstoff. | |

Das Verfahren wird typischerweise in alphabetischer Reihenfolge der obengenannten Schritte durchgeführt. Es können jedoch vor, gleichzeitig und nach sowie zwischen den genannten Schritten noch weitere Verfahrensschritte durchgeführt werden. Zum Beispiel kann zwischen den Schritten A. und B.1/B.2 ein Trocknungsschritt vorgesehen sein und/oder es können in Schritt B.2 noch weitere Bestandteile wie z.B. Härter aufgebracht werden.

Im Hinblick auf die im erfindungsgemäßen Verfahren eingesetzten Bestandteile Polyisocyanat, Ligninsulfonat und die isocyanatreaktiven Verbindungen gilt das bereits zu diesen Bestandteilen im Zusammenhang mit der erfindungsgemäßen Bindemittelzusammensetzung Gesagte entsprechend.

Schritt A. des erfindungsgemäßen Verfahrens besteht in der Bereitstellung von lignocellulosehaltigem Material. Wenn hier von "lignocellulosehaltigem Material" die Rede ist, ist damit pflanzliches Material gemeint, das Lignocellulose enthält. Lignocellulose im Sinne der Erfindung enthält Cellulose und/oder Hemicellulose sowie Lignin. Vorzugsweise handelt es sich bei dem lignocellulosehaltigen Material um holzenthaltendes Material oder Holz.

"Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind.

"Hemicellulose" ist eine Sammelbezeichnung für verschiedene Bestandteile pflanzlicher Zellwände. Bei den Hemicellulosen handelt es sich um verzweigte Polysaccharide mit einer geringeren Kettenlänge - üblicherweise weniger als 500 Zuckereinheiten - welche aus verschiedenen Zuckermonomeren aufgebaut sind. Hemicellulose ist im Wesentlichen aus verschiedenen Zuckermonomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose besteht aus Zuckermonomeren mit fünf Kohlenstoffatomen (Pentosen). Mannose bzw. Galactose besteht hauptsächlich aus Zuckermonomeren mit sechs Kohlenstoffatomen (Hexosen).

"Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

Das lignocellulosehaltige Material besteht vorzugsweise aus Holz oder ist ein holzenthaltendes Material. Das lignocellulosehaltige Material kann ausgewählt sein aus der Gruppe bestehend aus Holzmehl, Holzfasern, Holzspänen, Holzstrands und Hackschnitzeln. Gemäß einer bevorzugten Ausführungsform wird das lignocellulosehaltige Material in Form von Holzpartikeln bereitgestellt, d. h. es kann Holzpartikel enthalten oder daraus bestehen. Holzpartikel, wie hier verwendet, können Holz enthalten oder aus Holz bestehen. Beispiele für Holzpartikel sind feinteiliges Holzmaterial, Holzspäne, Holzstrands, Holzfasern, Holzwafer, Holzflakes und Hackschnitzel. Üblicherweise werden die Holzpartikel für Holzspanwerkstoffe durch schneidende Verfahren gewonnen, jene für Holzfaserstoffe durch Zerfaserung. In einem optionalen Schritt können die Holzpartikel vor oder nach dem Einsatz in Schritt A. des erfindungsgemäßen Verfahrens getrocknet oder zwischengelagert werden.

Schritt B. des erfindungsgemäßen Verfahrens besteht in dem Aufbringen einer erfindungsgemäßen Bindemittelzusammensetzung (Variante B.1) oder deren Bestandteile (Variante B.2) auf das lignocellulosehaltige Material. Für Variante B.1 und/oder B.2 kann die Bindemittelzusammensetzung in Form einer vorgemischten Bindemittelzusammensetzung vorliegen oder erst nach Einzelapplikation der Bestandteile der Bindemittelzusammensetzung entstehen. Demnach können das Polyisocyanat, das Ligninsulfonat und die isocyanatreaktive Verbindung, oder Einzelmischungen hiervon, auch separat von den weiteren Bestandteilen der Bindemittelzusammensetzung auf das lignocellulosehaltige Material aufgebracht werden. Das Aufbringen der getrennten Bestandteile kann simultan oder sequenziell erfolgen. Es können auch Einzelmischungen aus Bestandteilen aufgebracht werden. Beispielsweise kann eine vorgefertigte Mischung aus Ligninsulfonat und Polyisocyanat getrennt von den weiteren Komponenten, z.B. der isocyanatreaktiven Verbindung auf das lignocellulosehaltige Material aufgebracht werden. Die Bindemittelzusammensetzung kann also in Schritt B. als bereits hergestelltes Gemisch oder getrennt in Form ihrer Bindemittelbestandteile auf das lignocellulosehaltige Material aufgebracht werden und sich dort *in situ* bilden.

Das Aufbringen erfolgt durch Inkontaktbringen des lignocellulosehaltigen Materials mit der Bindemittelzusammensetzung bzw. deren Bestandteilen wie es dem Fachmann von der Beleimung von Holzpartikeln in der Holzwerkstoffproduktion allgemein bekannt ist. Das Aufbringen kann insbesondere durch Tränken oder Aufsprühen, insbesondere in einer Blowline, erfolgen. Das Aufbringen kann alternativ oder zusätzlich in einer Beleimtrommel erfolgen. Insbesondere kann das Aufbringen durch Düsen, z.B. mittels einer Zweistoffdüse, erfolgen.

Die Menge der in Schritt B.1 aufgebrachten Bindemittelzusammensetzung (bzw. der Gesamtmenge an in Schritt B.2 aufgebrachten Bestandteilen) beträgt vorzugsweise 1 bis 16 Gew.-%, insbesondere 1,5 bis 14 Gew.-%, noch bevorzugter 2,5 bis 12 Gew.-%, bezogen auf das Trockengewicht des lignocellulosehaltigen Materials (Festharz/atro). "Trockengewicht" oder "atro Holz", wie hierin verwendet, bezieht sich auf das Gewicht von darrtrockenem lignocellulosehaltigem Material, welches praktisch wasserfrei ist. Der darrtrockene Zustand des lignocellulosehaltigen Materials kann beispielsweise durch Lagerung bei einer Temperatur von 103 °C +/- 2 °C bis zur Gewichtskonstanz bzw. Massekonstanz erzielt werden. Das "Trockengewicht" ("atro Holz") eines Holzwerkstoffs wird bestimmt, indem zunächst der Feuchtegehalt von Prüfkörpern aus dem Holzwerkstoff nach DIN EN 322 ermittelt wird und dieses Ergebnis anschließend verwendet wird, um den Feuchtegehalt aus dem Holzwerkstoffgewicht zur Berechnung des Trockengewichts herauszurechnen. Für viele Anwendungen ist es besonders praxisgerecht, wenn das Bindemittel in einer Menge von 1,5 bis 14 Gew.-% bezogen auf das Trockengewicht des lignocellulosehaltigen Materials (Festharz/atro) eingesetzt wird.

In Schritt C. des erfindungsgemäßen Verfahrens wird das mit der Bindemittelzusammensetzung bzw. deren Bestandteilen beleimte lignocellulosehaltige Material zu einem Holzwerkstoff verpresst. Gemäß einer weiteren Ausführungsform werden in Schritt C zwei oder mehr Schichten aus beleimten lignocellulosehaltigem Material verpresst. Zweckmäßig ist insbesondere das Verpressen von zwei, drei oder fünf Schichten aus beleimten lignocellulosehaltigem Material. Besonders bevorzugt ist das Verpressen von drei Schichten aus lignocellulosehaltigem Material, wobei eine Mittelschicht von zwei Deckschichten sandwichartig umgeben ist. Die Verpressung erfolgt nach Verfahren zur Herstellung von Holzwerkstoffen, die dem Fachmann wohlbekannt sind. Grundsätzlich sind dem Fachmann verschiedene Methoden bekannt, um Holzwerkstoffe durch Verpressen herzustellen. Das Verpressen findet üblicherweise unter erhöhter Temperatur, insbesondere bei 100 °C bis 250 °C statt. Vorzugsweise handelt es sich bei Schritt C. um eine Heißverpressung. Optimale Ergebnisse können erzielt werden, wenn der Pressfaktor beim Pressen von 2 bis 10 s/mm, bevorzugt von 3 bis 6 s/mm, beträgt. Unter Pressfaktor wird hier insbesondere die Verweilzeit des lignocellulosehaltigen Holzwerkstoffs in Sekunden je Millimeter Dicke oder Stärke des fertigen gepressten lignocellulosehaltigen Holzwerkstoffs in der Presse verstanden.

Geeignete Temperaturen für das Verpressen in Schritt C. des erfindungsgemäßen Verfahrens oder einer seiner Ausführungsformen sind Temperaturen von 100 °C bis 250 °C, insbesondere 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung des lignocellulosehaltigen Materials sicher. Zudem kann mit einem solchen Pressdruck eine hohe Festigkeit der Holzwerkstoffe erreicht werden.

Eine weitere Ausführungsform der Erfindung besteht in einem mehrschichtigen Holzwerkstoff, der mindestens eine Mittelschicht und mindestens zwei Deckschichten umfasst, wobei die Mittelschicht eine erfindungsgemäße Bindemittelzusammensetzung, wie oben beschrieben, enthält und mindestens eine der Deckschichten ein aminoplastbasiertes Bindemittel enthält. Vorzugsweise enthalten die Deckschichten bzw. das darin enthaltene aminoplastbasierte Bindemittel kein Polyisocyanat oder weniger als 10 Gew.-%, weniger als 5 Gew.-% oder weniger als 1 Gew.-%, bezogen auf das Gesamtgewicht der Deckschichten, Polyisocyanat.

Bei der Herstellung des erfindungsgemäßen mehrschichtigen Holzwerkstoffs werden die Deck- und Mittelschichten vorzugsweise wie folgt hergestellt: Die Herstellung der beleimten Mittelschicht erfolgt durch die Schritte A.1 und B.1 oder A.1 und B.2 wie oben beschrieben. Die beleimten Deckschichten können hergestellt werden durch
A.0 Bereitstellen von lignocellulosehaltigem Material; und
B.0 Aufbringen eines aminoplastbasierten Bindemittels auf das lignocellulosehaltige Material aus Schritt A.0.

Diese derart beleimten lignocellulosehaltigen Materialien für die Mittel- und Deckschichten werden in Schritt C.2 zu einem mehrschichtigen Holzwerkstoff verpresst, sodass die Mittelschicht Teil des Innenbereichs des mehrschichtigen Holzwerkstoffs ist und sandwichartige zwischen den Deckschichten angeordnet ist.

Als besonders praktikabel hat sich erwiesen, mehrschichtige Holzwerkstoffe herzustellen, welche mindestens eine Mittelschicht aufweisen, die mit der erfindungsgemäßen Bindemittelzusammensetzung gemäß Schritt B.1 oder B.2 beleimt worden ist. Eingebettet wird die Mittelschicht zwischen zwei Deckschichten, die mit einem aminoplastbasiertem Bindemittel beleimt worden sind. Die Mittelschicht bildet demnach einen Teil bzw. ein partielles Volumen des Innenbereichs des Holzwerkstoffs. Im Gegensatz dazu sind die Deckschichten weiter an der Oberfläche des mehrschichtigen Holzwerkstoffs bzw. bilden die Außenschichten. Neben den beschriebenen Mittel- und Deckschichten können in dem erfindungsgemäßen mehrschichtigen Holzwerkstoff noch weitere Schichten enthalten sein.

Vorteilhaft ist der beschriebene Schichtaufbau insbesondere dadurch, dass bereits während der Herstellung des Holzwerkstoffs freies Formaldehyd, welches in den aminoplasthaltigen Deckschichten enthalten ist, durch die Formaldehydfänger der Mittelschicht, d.h. durch die isocyanatreaktiven Verbindungen, chemisch abgebunden wird. Ohne an eine bestimmte wissenschaftliche Theorie gebunden sein zu wollen, scheint während der Verpressung, die bei hohen Temperaturen erfolgt, der dadurch entstehende Dampf, einschließlich des ungebundenen Formaldehyds, in den Innenbereich des herzustellenden Holzwerkstoffs zu wandern. Dort kann freies Formaldehyd dann unmittelbar durch die Fängersubstanzen gebunden werden, bevor dieses bei Abkühlung des hergestellten Holzwerkstoffs zusammen mit der Restfeuchtigkeit in der Holzwerkstoffmitte wieder in die Außenschichten und anschließend ins Freie bzw. die Umwelt entweicht.

Des Weiteren ist vorteilhaft an dem beschriebenen Schichtaufbau des mehrschichtigen Holzwerkstoffs, dass der teure Bindemittelbestandteil i) in Form des Polyisocyanats, insbesondere in Form von PMDI, ausschließlich in der Mittelschicht eingesetzt zu werden braucht. In der erfindungsgemäßen Bindemittelzusammensetzung ist der Polyisocyanatanteil ohnehin niedrig aufgrund der Teilsubstitution durch den Reaktivphasenvermittler Ligninsulfonat. In dem mehrschichtigen Holzwerkstoff wird jedoch zusätzlich an dem Bindemittelbestandteil Polyisocyanat eingespart, da in den Deckschichten ein kostengünstiges aminoplastbasiertes Bindemittel eingesetzt wird. Versuche haben gezeigt, dass trotz der Verwendung des aminoplastbasierten Bindemittels, d.h. eines formaldehydhaltigen Bindemittels, die Formaldehydemission niedrig ist aufgrund des Einsatzes der erfindungsgemäßen Fängersubstanzen in der Mittelschicht.

Die Mittelschicht kann von 5 bis 85 Gew.-%, bevorzugt 10 bis 70 Gew.-% und insbesondere bevorzugt 15 bis 65 Gew.-% des Gesamtgewichts des Holzwerkstoffs ausmachen. Die Deckschichten können insgesamt 15 bis 95 Gew.-%, bevorzugt 30 bis 90 Gew.-% und insbesondere bevorzugt 35 bis 85 Gew.-% des Gesamtgewichts des Holzwerkstoffs ausmachen. Ein typischer Schichtenaufbau ist z.B. 20 Gew.-% Deckschicht, 40 Gew.-% Mittelschicht, 20 Gew.-% Deckschicht, wobei die Gew.-% immer auf das Gesamtgewicht des Holzwerkstoffs bezogen sind.

Alternativ können die Schichten auch durch das Verhältnis der Schichtdicken des Holzwerkstoffs definiert werden. Der Holzwerkstoff ist typischerweise eine Holzwerkstoffplatte. Bei einer erfindungsgemäßen mehrschichtigen Holzwerkstoffplatte kann die Mittelschicht 5 bis 85 %, bevorzugt 10 bis 70 % und insbesondere bevorzugt 15 bis 65 % der Gesamtplattendicke, gemessen entlang der Querachse der Holzwerkstoffplatte ausmachen. Die Deckschichten können insgesamt 15 bis 95 Gew.-%, bevorzugt 30 bis 90 Gew.-% und insbesondere bevorzugt 35 bis 85 Gew.-% der Gesamtplattendicke, gemessen entlang der Querachse der Holzwerkstoffplatte ausmachen. Der Begriff "Querachse", wie hierin verwendet, bezeichnet diejenige Achse, die senkrecht zur größten Oberfläche der Holzwerkstoffplatte verläuft. Es handelt sich hierbei um einen klassischen Querschnitt. Die vorstehenden %-Angaben beziehen sich demnach auf den Anteil den die jeweiligen Schichten in Bezug auf die Gesamtplattendicke im Plattenquerschnitt ausmachen.

Maßgeblich für den Anteil der Mittelschicht an dem mehrschichtigen Holzwerkstoff ist dabei die voraussichtliche Menge an entstehendem Formaldehyd. In einer weiteren Ausführungsform beträgt das Gewichtsverhältnis der Schichten (Deckschicht:Mittelschicht:Deckschicht, bezogen auf das Trockengewicht des lignocellulosehaltigen Materials der jeweiligen Schicht) bei einem dreischichtigen Aufbau des Holzwerkstoffs von 20 : 60 : 20 bis zu 30 : 40 : 30. Besonders gute Ergebnisse stellen sich beispielsweise bei einem Deckschicht:Mittelschicht:Deckschicht Verhältnis von 25 : 50 : 25 ein.

Wenn hiervon einem "aminoplastbasiertem" Bindemittel die Rede ist, dann sind damit Bindemittel gemeint, die durch Polykondensation einer Amino-, Imino- oder Amidgruppen enthaltendem Bestandteil mit einer Carbonylverbindung aushärten. Häufige Ausgangsmaterialien für Aminoplastharze sind beispielsweise Harnstoff und/oder Melamin (als Aminogruppen enthaltender Bestandteil) und Formaldehyd (als Carbonylverbindung). Aminoplastharze, die aus Harnstoff und Formaldehyd gebildet werden, bezeichnet man auch als Harnstoffformaldehydharze. Harze, die aus Melamin und Formaldehydgebildet werden, bezeichnet man als Melaminformaldehydharz. Beispiele für Aminoplastharze sind Harnstoff-Formaldehyd-Harz (UF), Melamin-Formaldehyd (MF), Melamin-Harnstoff-Formaldehyd-Harz (MUF), Melamin-Phenol-Formaldehyd (MPF), Melamin-Harnstoff-Phenol-Formaldehyd-Harz (MUPF) oder Mischungen hiervon.

Das aminoplastbasierte Bindemittel kann einen Härter enthalten. Im erfindungsgemäßen Verfahren kann der Härter dem aminoplastbasierten Bindemittel vor oder während des Beleimens zugesetzt werden. Dies kann insbesondere dadurch erfolgen, dass der erfindungsgemäßen Bindemittelzusammensetzung vor dem Auftragen auf das lignocellulosehaltige Material ein Härter zugesetzt wird. Es ist jedoch auch möglich während des Beleimens der Holzpartikel das aminoplastbasierte Bindemittel und einen Härter getrennt voneinander, gegebenenfalls mit weiteren Additiven, auf die Holzpartikel aufzutragen.

Als Härter kommen konventionelle Härter, wie sie dem Fachmann aus dem Gebiet der Aminoplastharze bekannt sind, in Betracht. Beispiele für konventionelle Härter sind starke organische Säuren, anorganische Säuren, wie Schwefelsäure und Phosphorsäure, Salze, die in Wasser sauer reagieren, wie Aluminiumchlorid und Aluminiumnitrat (auch als saure Salze bezeichnet), Salze, die durch Reaktion mit Bestandteilen des Aminoplastharzes, vorzugsweise mit Formaldehyd, eine Säure generieren (auch als Säure generierende Salze bezeichnet) wie Ammoniumphosphat, Ammoniumnitrat, Ammoniumsulfat und Ammoniumchlorid, und Mischungen der vorgenannten Substanzen.

Wenn hier oder an anderer Stelle von Aminoplastharz die Rede ist, dann ist damit nicht nur das Kondensationsprodukt, also der eigentliche Aminoplast, gemeint, sondern primär auch die zugrundeliegenden Aminoplastharzzusammensetzungen, welche die Ausgangsstoffe zur Herstellung eines Aminoplasten, also mindestens einen Amino-, Imino- oder Amidgruppen enthaltenden Bestandteil und mindestens eine Carbonylverbindung, sowie ggf. Vorkondensate enthalten. Derartige Aminoplastharzzusammensetzungen enthalten typischerweise Wasser. Gemäß einer Ausführungsform ist das Aminoplastharz noch nicht ausgehärtet. Gemäß einer anderen Ausführungsform besitzt das Aminoplastharz die Fähigkeit zur Kondensation, d.h. es ist noch nicht oder zumindest noch nicht vollständig kondensiert. Das Aminoplastharz enthält hierbei Ausgangsstoffe für Aminoplaste und ggf. aminoplastische Vorkondensate.

In einer weiteren Ausführungsform des Verfahrens, kann in einer oder mehreren Deckschichten eine Mischung verschiedener Aminoplastharze verwendet werden. Mit der Anwendung des erfindungsgemäßen Verfahrens wird der Nachteil einer kostspieligen Produktion eines im Wesentlichen mit polyisocyanatverleimten Holzwerkstoffs vermieden und gleichzeitig eine niedrige Formaldehydemission des hergestellten Holzwerkstoffs erzielt. Das erfindungsgemäße Verfahren ist insgesamt besonders kostengünstig, effektiv und umweltschonend, da an dem teuren Rohstoff PMDI eingespart wird und das kostengünstige biobasierte Ligninsulfonats einerseits als Substitut für PMDI und andererseits als Emulgator und Reaktivphasenvermittler für Formaldehydfängersubstanzen im Bindemittel fungiert.

### Holzwerkstoffe

Die Erfindung stellt Holzwerkstoffe bereit, die ein Reaktionsprodukt einer der hier beschriebenen, erfindungsgemäßen Bindemittelzusammensetzungen enthalten. Wenn hier oder an anderer Stelle von "Reaktionsprodukt" die Rede ist, dann ist damit das Produkt der Reaktion der Bindemittelbestandteile, d.h. das Produkt der Vernetzungsreaktion, gemeint.

Durch die Nachweisbarkeit der Bestandteile Polyisocyanat, Ligninsulfonat, und Ammoniak/NH₂-Gruppen enthaltende isocyanatreaktive Verbindung, bzw. die Nachweisbarkeit deren Reaktionsprodukte, kann der Fachmann erfindungsgemäße Holzwerkstoffe einfach von den aus dem Stand der Technik bekannten Holzwerkstoffen unterscheiden.

Die Holzwerkstoffe, enthaltend das Reaktionsprodukt der erfindungsgemäßen Bindemittelzusammensetzung, können ein- oder mehrschichtig sein. Die erfindungsgemäßen Holzwerkstoffe sind insbesondere erhältlich nach den hier beschriebenen erfindungsgemäßen Verfahren. Ein einschichtiger Holzwerkstoff wird insbesondere erhalten durch die Verfahrensschritte A.1, B.1 und C.1 oder A.1, B.2 und C.1. Ein mehrschichtiger Holzwerkstoff wird insbesondere erhalten durch die Verfahrensschritte A.0, B.0, A.1, B.1 und C.2 oder A.0, B.0, A.1, B.2 und C.2.

In einer Ausführungsform ist der Holzwerkstoff mehrschichtig und umfasst mindestens eine Mittelschicht sowie mindestens zwei Deckschichten, wobei das Reaktionsprodukt der erfindungsgemäßen Bindemittelzusammensetzung in mindestens einer Mittelschicht des mehrschichtigen Holzwerkstoffs enthalten ist. In einer weiteren Ausführungsform, weist der mehrschichtige Holzwerkstoff in mindestens einer Mittelschicht ein erfindungsgemäßes Reaktionsprodukt der Bindemittelzusammensetzung auf, wobei mindestens eine Deckschicht, vorzugsweise beide Deckschichten, ein Reaktionsprodukt einer aminoplastbasierten Bindemittelzusammensetzung enthalten. Der mehrschichtige Holzwerkstoff ist vorzugsweise eine mehrschichtige Holzwerkstoffplatte.

Genauso wie dem Fachmann Messmethoden für die Bestandteile und das Reaktionsprodukt der erfindungsgemäßen Bindemittelzusammensetzung bekannt sind, kann der Fachmann die Bestandteile und das Reaktionsprodukt aminoplastbasierter Bindemittelzusammensetzungen im Holzwerkstoff nachweisen.

Erfindungsgemäße Holzwerkstoffe lassen sich besonders gut zur Herstellung eines Laminats, Bodenbelags, einer Arbeitsplatte, Tischplatte oder eines Möbelstücks verwenden. Wenn hier von "Holzwerkstoffen" die Rede ist, so sind damit alle Werkstoffe gemeint, die lignocellulosisches Material, insbesondere Holz, enthalten. Holzwerkstoffe im Sinne der Erfindung sind insbesondere ausgewählt aus der Gruppe bestehend aus Spanplatte, OSB-Platte, Faserplatte, furnierbasierender Holzwerkstoff, einem Faserformteil oder Spanholzformteil. Erfindungsgemäße mehrschichtige Holzwerkstoffe sind insbesondere Span- oder Faserplatten.

Gemäß einer Ausführungsform handelt es sich bei dem erfindungsgemäßen Holzwerkstoff um einen Holzspanwerkstoff, insbesondere eine Span- oder OSB-Platte. Wenn hier von "Spanplatte" die Rede ist, dann werden darunter Spanplatten im weiteren Sinne verstanden, nämlich Holzwerkstoffe, die aus spanend hergestellten Holzpartikeln und mindestens einem Bindemittel mittels Wärme und Druck hergestellt werden. Eine andere Produktgruppe im Bereich der Holzwerkstoffe, die nicht von dem Begriff "Holzspanwerkstoff' oder "Spanplatte" wie hier verwendet umfasst ist, stellen die Holzfaserwerkstoffe dar. Zu letzteren gehören Faserplatten, wie beispielsweise die mitteldichten (MDF) und hochdichten (HDF) Faserplatten.

Grundsätzlich kennt der Fachmann unterschiedliche Holzspanwerkstoffe. Beispiele hierfür sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamine Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB-Platten können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden.

Gemäß einer Ausführungsform der Erfindung ist der Holzwerkstoff eine Holzspanwerkstoffplatte. Vorzugsweise ist der Holzwerkstoff eine Span- oder OSB-Platte. Praktische Versuche haben gezeigt, dass sich das erfindungsgemäße Verfahren sowie die beschriebenen Ausführungsformen besonders gut zur Herstellung von gepressten Holzspanwerkstoffen, insbesondere zur Herstellung von Span- und OSB-Platten eignen.

Gemäß einer anderen Ausführungsform handelt es sich bei dem erfindungsgemäßen Holzwerkstoff um eine Faserplatte.

Vorzugsweise besteht der erfindungsgemäße Holzwerkstoff im Wesentlichen aus lignocellulosehaltigem Material und Bindemitteln. "Im Wesentlichen" bedeutet hierbei zu über 70 Gew.-%, 85 Gew.-%, 95 Gew.-% oder 97 Gew.-%, jeweils bezogen auf das Gesamtgewicht des Holzwerkstoffs.

Es ist jedoch auch möglich, dass der Holzwerkstoff weitere Stoffe enthält. Beispielsweise können Netz- und/oder Trennmittel für einen verbesserten Pressvorgang zugesetzt werden. Weiterhin können Pilzschutzmittel, Hydrophobiermittel, Farbstoffe oder Feuerschutzmittel und/oder Füllstoffe zugesetzt werden.

### Verwendung

Praktische Versuche haben gezeigt, dass sich die erfindungsgemäßen Bindemittelzusammensetzungen hervorragend zur Holzwerkstoffproduktion eignen. Sie können jedoch auch zur Verklebung von Holzwerkstoffen oder Holz mit anderen Materialien eingesetzt werden, d.h. zur Veredelung bzw. Oberflächenveredelung des Holzwerkstoffs oder des Holzes mit diversen Beschichtungsstoffen. Durch eine Verklebung bzw. Veredelung des Holzwerkstoffes oder des Holzes mit mindestens einem Beschichtungsstoff kann die Optik und/oder Haptik der Oberfläche des Holzwerkstoffs oder des Holzes angepasst werden. Eine Verwendung der erfindungsgemäßen Bindemittelzusammensetzungen ist insbesondere als Flächenleim auf Holzwerkstoff- oder Holzoberflächen möglich.

In einer Ausführungsform betrifft die Erfindung die Verwendung erfindungsgemäßer Bindemittelzusammensetzungen als Flächenleim zur Applikation von Beschichtungsstoffen auf einem Untergrund. Vorzugsweise ist dabei entweder der Beschichtungsstoff oder der Untergrund Holz oder ein Holzwerkstoff. Der Beschichtungsstoff ist vorzugsweise ausgewählt aus Furnieren, Schichtstoffen, Folien, Textil, insbesondere Gewebe oder Gewirke, Vlies, insbesondere Glasfaservlies, Kork, Glas, Keramik und Mischungen hieraus. In einer besonders bevorzugten Ausführungsform ist der Beschichtungsstoff ein Furnier. In einer weiteren Ausführungsform werden unterschiedliche Beschichtungsstoffe auf den Untergrund aufgebracht.

Die erfindungsgemäße Bindemittelzusammensetzung wird als Flächenleim in einer Menge von 10 bis 150 g/m² auf den Untergrund aufgetragen. Besonders praxisgerechte Ergebnisse stellen sich ein, wenn die als Flächenleim eingesetzte Bindemittelzusammensetzung in einer Menge von 20 bis 150 g/m² oder noch bevorzugter 50 bis 150 g/m² verwendet wird. Maßgeblich für die Menge an Flächenleim ist dabei die Saugfähigkeit des Untergrundes. Die Mengenangabe des einzusetzenden Flächenleims in Gramm (g) für einen Quadratmeter (m²) des Untergrundes bezieht sich dabei auf den Feststoffanteil des Flächenleims bzw. der Bindemittelzusammensetzung.

In einer weiteren Ausführungsform betrifft die Erfindung die Verwendung erfindungsgemäßer Bindemittelzusammensetzungen zur Reduktion von Formaldehydemissionen in Holzwerkstoffen, insbesondere mehrschichtigen Holzwerkstoffen wie vorstehend beschrieben.

Standardmethoden zur Bestimmung der Formaldehydemission eines Holzwerkstoffes sind dem Fachmann bekannt. Die Prüfung erfolgt vorzugsweise nach der DesiccatorMethode gemäß JIS A 1460 (2001).

### BEISPIELE

Die folgenden Ausführungsbeispiele dienen der näheren Erläuterung der Erfindung, insbesondere in Bezug auf bestimmte Ausführungsformen der Erfindung. Die Ausführungsbeispiele sollen die vorliegende Offenbarung jedoch nicht einschränken.

Die folgenden Abkürzungen werden verwendet:
- A60: 60% Ammoniumnitratlösung in Wasser, TOP CHEM Chemikalienhandel GmbH
- atro: absolut trocken, wobei zunächst der Feuchtegehalt des Holzwerkstoffs nach DIN EN 322 bestimmt wird und dieses Ergebnis anschließend verwendet wird, um den Feuchtegehalt herauszurechnen.
- DS: Deckschicht
- LS: Magnesium-Ligninsulfonat, Collex 55 G, Sappi Biotech GmbH
- MS: Mittelschicht
- OSB: Oriented strand board
- PMDI: Polymeres Diphenylmethandiisocyanat, Ongronat^{®} WO 2750, BorsodChem Chemistry for generations
- REF: Referenzplatte
- U40: 40%-ige (w/v) Harnstofflösung in Wasser
- UF: 8% (w/v) wässriges Harnstoff-Formaldehyd-Kondensationsprodukt, Primere^{™} 10F102, metadynea

### Beispiel 1

Es wurden 16 mm dicke Spanplatten hergestellt. Die Spanplatten wurden mit einer Zieldichte von 650 kg/m³ produziert, wobei Späne mit einer Feuchte von 1 % eingesetzt wurden. Die hergestellten Platten wiesen einen dreischichtigen Aufbau auf, wobei das Verhältnis (Spangewicht) von Deckschicht (DS)/Mittelschicht (MS)/Deckschicht 20:60:20 Gew.-% bezogen auf das Gesamtgewicht der in der Platte vorhandenen Späne betrug.

Bei der Herstellung der Spanplatten dieser Versuchsreihe wurden die Bindemittelzusammensetzungen, mit welchen die Späne beleimt wurden, variiert. Die Referenzplatte wurden in der Deckschicht mit einer Bindemittelzusammensetzung enthaltend PMDI und den Formaldehydfänger Harnstoff (siehe Tabelle 1, REF1) beleimt. Die Bindemittelzusammensetzungen für die Deckschichten der Versuchsplatten enthielten zusätzlich zu PMDI und Harnstoff den Bindemittelbestandteil Lignin S (LS) (siehe Tabelle 1, Plattennr. 1 und 2).

Die Pressung der Platten wurde bei einem Pressdruck von maximal 150 bar und einem Pressfaktor von 8,1 Sekunden/mm durchgeführt, was zu einer Pressdauer von 129,6 Sekunden führte. Der spezifische Pressdruck betrug 583 N/m². Die Presstemperatur betrug 220 °C.

Die hergestellten Spanplatten wurden bezüglich der plattenrelevanten Kenngrößen Querzugfestigkeit, Quellung und Wasseraufnahme untersucht. Die Querzugfestigkeit wurde mittels der EN 319 an der Zwick-Roell Zmart.Pro ermittelt. Die Quellung wurde nach EN 317 gemessen. Die Wasseraufnahme wurde nach Verbleib der Platten für 24 Stunden im Quellbecken untersucht.

In Tabelle 1 sind die Versuchsparameter bezüglich der Bindemittelzusammensetzung in der Mittel- und Deckschicht für die hergestellten Spanplatten zusammengefasst.

**Tabelle 1: Versuchsparameter bezüglich der Bindemittelzusammensetzung**

| | **Mittelschicht [% (fest/atro)]** | | | **Deckschicht [% (fest/atro)]** | | | |
|---|---|---|---|---|---|---|---|
| Platten-Nummer | PMDI | LS | Soll-Feuchte | PMDI | LS | U40 | Soll-Feuchte |
| REF1 | 4 | - | | 3,6 | - | 0,4 | 14 |
| 1 | 4 | - | | 3 | 0,6 | 0,4 | 14 |
| 2 | 4 | - | | 2 | 1 | 1 | 14 |

Die plattenrelevanten Kenngrößen wurden jeweils an 10 Einzelprüflingen untersucht, die aus der Ursprungsplatte generiert wurden. Insgesamt liegen daher für jede hergestellte Spanplatte 10 Einzelmessergebnisse pro plattenrelevanter Kenngröße vor.

In Tabelle 2 sind die Mittelwerte der Messergebnisse für die Querzugfestigkeit, Quellung und Wasseraufnahme für die der hergestellten Spanplatten zusammengefasst.

**Tabelle 2: Mittelwerte der Messergebnisse für Querzugfestigkeit, Quellung und Wasseraufnahme**

| | **Querzug** | | | **Wasseraufnahme** | | | |
|---|---|---|---|---|---|---|---|
| Platten-Nummer | Dicke [mm] | Dichte [kg/m³] | Querzug [N/mm²] | Dicke [mm] | Dichte [kg/m³] | Quellung [%] | Wasseraufnahme [%} |
| REF1 | 15,86 | 661,22 | 0,63 | 15,71 | 636,74 | 21,70 | 70,83 |
| 1 | 15,75 | 671,28 | 0,66 | 15,60 | 662,81 | 25,66 | 75,84 |
| 2 | 15,84 | 665,66 | 0,65 | 15,68 | 676,40 | 28,40 | 79,12 |

Der Einsatz von LS in den Deckschichten der Versuchsplatten 1 und 2 führt zu keiner Verschlechterung der Querzugfestigkeit im Vergleich zu der Referenzplatte (siehe Tabelle 2, vergleiche REF1 zu 1 oder 2).

Durch Einsatz von LS als Substitut von PMDI kommt es jedoch zu einer etwas erhöhten Quellung und Wasseraufnahme (siehe Tabelle 1, REF1 zu 1 oder 2).

Insgesamt wirkt sich der Einsatz von LS in Bindemittelzusammensetzungen enthaltend PMDI und Harnstoff jedoch positiv auf die mechanischen Eigenschaften der so hergestellten Platten aus.

### Beispiel 2

Es wurden 16 mm dicke Spanplatten hergestellt. Die Spanplatten wurden mit einer Zieldichte von 650 kg/m³ produziert, wobei Späne mit einer Feuchte von 1 % eingesetzt wurden. Die hergestellten Platten wiesen einen dreischichtigen Aufbau auf, wobei das Verhältnis (Spangewicht) von DS/MS/DS 20:60:20 Gew.-% bezogen auf das Gesamtgewicht der in der Platte vorhandenen Späne betrug.

Bei der Herstellung der Spanplatten dieser Versuchsreihe wurde ein aminoplastbasiertes Bindemittel mit einem polyisocyanatbasiertem Bindemittel kombiniert. Die Referenzplatte wurde bei Einsatz von UF in der Mittelschicht in der Deckschicht mit PMDI oder PMDI/LS verleimt. Umgekehrt wurde bei Einsatz von PMDI oder PMDI/LS in der Mittelschicht, die Deckschicht der Referenzplatte mit UF verleimt. Die Versuchsplatte wurde bei Einsatz von UF in der Mittelschicht in der Deckschicht mit PMDI/LS/U40 verleimt. Umgekehrt wurde bei Einsatz von PMDI/LS/U40 in der Mittelschicht, die Deckschicht der Versuchsplatten mit UF verleimt.

Die Pressung der Platten wurde bei einem Pressdruck von maximal 150 bar und einem Pressfaktor von 8,1 Sekunden/mm durchgeführt, was zu einer Pressdauer von 129,6 Sekunden führte. Der spezifische Pressdruck betrug 583 N/m². Die Presstemperatur betrug 220 °C.

Die hergestellten Spanplatten wurden bezüglich ihrer Formaldehydemission nach der Desiccatormethode (JIS 1460) untersucht.

In Tabelle 3 sind die Versuchsparameter bezüglich der Bindemittelzusammensetzung in der Mittel- und Deckschicht für die hergestellten Spanplatten zusammengefasst.

**Tabelle 3: Versuchsparameter bezüglich der Bindemittelzusammensetzung**

| | **Mittelschicht [% (fest/atro)]** | | | | | **Deckschicht [% (fest/atro)]** | | | | | |
|---|---|---|---|---|---|---|---|---|---|---|---|
| Plattennummer | PMDI | LS | U40 | UF | A60 | PMDI | LS | U40 | UF | A60 | Soll-Feuchte |
| | | | | | | | | | | | [%] |
| REF1 | - | - | - | 8 | 3 | 4 | - | - | - | - | DS: 14 |
| | | | | | | | | | | | MS: 7 |
| REF2 | - | - | - | 8 | 3 | 3 | 1 | - | - | - | DS: 14 |
| | | | | | | | | | | | MS: 7 |
| 1 | - | - | - | 8 | 3 | 3 | 0,5 | 0,4 | - | - | DS: 14 |
| | | | | | | | | | | | MS: 7 |
| REF3 | 4 | - | - | - | - | - | - | - | 8 | 3 | DS: 14 |
| | | | | | | | | | | | MS: 7 |
| REF4 | 3 | 1 | - | - | - | - | - | - | 8 | 3 | DS: 14 |
| | | | | | | | | | | | MS: 7 |
| 2 | 3 | 0,5 | 0,4 | - | - | - | - | - | 8 | 3 | DS: 14 |
| | | | | | | | | | | | MS: 7 |

In Tabelle 4 sind die Messergebnisse für die Formaldehydemission der Versuchsreihe zusammengefasst.

**Tabelle 4: Messergebnisse für die Formaldehydemission der hergestellten Spanplatten**

| | **Emissionsanalvse** |
|---|---|
| Plattennummer | Formaldehydemission |
| | mg/l |
| REF1 | 0,594 |
| REF2 | 0,901 |
| 1 | 0,550 |
| REF3 | 1,360 |
| REF4 | 0,844 |
| 2 | 0,760 |

Bei Einsatz der Bindemittelzusammensetzung PMDI/LS/U40 in der Deckschicht oder der Mittelschicht, zusammen mit einer UF-Beleimung der jeweils anderen Schicht, ist die Formaldehydemission niedriger als in den Referenzplatten (siehe Tabelle 4, vergleiche REF1 und REF2 zu 1 sowie REF3 und REF4 zu 2).

Der Einsatz von PMDI/LS/U40 zur Beleimung einer Mittelschicht oder Deckschicht, in Kombination mit einer UF-verleimten Deckschicht bzw. Mittelschicht, ist daher förderlich zur Reduktion der Formaldehydemission dieser Platten.

## Patentansprüche

1. Polyisocyanatbasierte Bindemittelzusammensetzung zur Herstellung und/oder Veredelung von Holzwerkstoffen mit reduzierter Formaldehydemission enthaltend, jeweils als Feststoffgewicht bezogen auf das Gesamtfeststoffgewicht der Bindemittelzusammensetzung,
i) 30 bis 95 Gew.-% Polyisocyanat,
ii) 1 bis 50 Gew.-% Ligninsulfonat, und
iii) 1 bis 50 Gew.-% isocyanatreaktive Verbindung, die
a) Ammoniak oder eine ammoniakabspaltende Verbindung wie Ammoniumcarbonat ist, oder
b) mindestens eine NH₂-Gruppe und eine weitere mit Isocyanatgruppen reagierende Gruppe im Molekülaufbau enthält, oder
c) eine Mischung von Verbindungen aus a) und/oder b) ist.

2. Bindemittelzusammensetzung nach Anspruch 1, **dadurch gekennzeichnet, dass** die isocyanatreaktive Verbindung b) ausgewählt ist aus der Gruppe bestehend aus Polyaminen, Aminoalkoholen, Aminosäuren, Polypeptiden, Dicyandiamid, Harnstoff, Thioharnstoff und Melamin.

3. Bindemittelzusammensetzung nach Anspruch 1 oder 2, **dadurch**
**gekennzeichnet, dass** das Polyisocyanat ein aromatisches Polyisocyanat ist, insbesondere ausgewählt aus der Gruppe bestehend aus Diphenylmethandiisocyanat (MDI) und polymeren Diphenylmethandiisocyanat (PMDI).

4. Bindemittelzusammensetzung nach einem der vorstehenden Ansprüche,
**dadurch gekennzeichnet, dass** die isocyanatreaktive Verbindung wasserlöslich ist.

5. Bindemittelzusammensetzung nach einem der vorstehenden Ansprüche, **dadurch gekennzeichnet, dass** die Bindemittelzusammensetzung als Lösung, im Wesentlichen einphasige Zusammensetzung und/oder Dispersion, vorliegt.

6. Holzwerkstoff enthaltend ein Reaktionsprodukt der in einem der Ansprüche 1 bis 5 angegebenen Bindemittelzusammensetzung, wobei Reaktionsprodukt das Produkt der Vernetzungsreaktion bedeutet.

7. Holzwerkstoff nach Anspruch 6, **dadurch gekennzeichnet, dass** der Holzwerkstoff mehrschichtig ist und mindestens eine Mittelschicht sowie mindestens zwei Deckschichten umfasst, wobei das Reaktionsprodukt der in einem der Ansprüche 1 bis 5 angegebenen Bindemittelzusammensetzung in mindestens einer Mittelschicht des mehrschichtigen Holzwerkstoffs enthalten ist.

8. Holzwerkstoff nach Anspruch 7, **dadurch gekennzeichnet, dass** mindestens eine Deckschicht des mehrschichtigen Holzwerkstoffs ein Reaktionsprodukt einer aminoplastbasierten Bindemittelzusammensetzung enthält.

9. Holzwerkstoff nach Anspruch 7 oder 8, **dadurch gekennzeichnet, dass** die Mittelschicht 5 bis 85 Gew.-%, bevorzugt 10 bis 70 Gew.-% und insbesondere bevorzugt 15 bis 65 Gew.-% des Gesamtgewichts des Holzwerkstoffs ausmacht.

10. Holzwerkstoff nach Anspruch 9, **dadurch gekennzeichnet, dass** der mehrschichtige Holzwerkstoff eine mehrschichtige Span- oder Faserplatte ist.

11. Holzwerkstoff nach Anspruch 6 bis 10, **dadurch gekennzeichnet, dass** der Holzwerkstoff ausgewählt ist aus der Gruppe bestehend aus einer Spanplatte, OSB-Platte, Faserplatte, einem furnierbasiertem Holzwerkstoff, einem Faserformteil oder Spanholzformteil.

12. Verfahren zur Herstellung eines Holzwerkstoffs, umfassend mindestens die folgenden Schritte:
A.1 Bereitstellen von lignocellulosehaltigem Material;
B.1 Aufbringen einer Bindemittelzusammensetzung nach einem der Ansprüche 1 bis 5 auf das lignocellulosehaltige Material; oder
B.2 Aufbringen der folgenden Bestandteile einer Bindemittelzusammensetzung auf das lignocellulosehaltige Material, wobei die Gew.-%-Angaben der Bestandteile i), ii) und iii) bezogen sind auf das Trockengewicht des lignocellulosehaltigen Materials aus Schritt A.1:
i) 1 bis 10 Gew.-% Polyisocyanat,
ii) 0,05 bis 3 Gew.-% Ligninsulfonat, und
iii) 0,05 bis 3 Gew.-% einer isocyanatreaktiven Verbindung, die
a) Ammoniak oder eine ammoniakabspaltende Verbindung wie Ammoniumcarbonat ist, oder
b) mindestens eine NH₂-Gruppe und eine weitere mit Isocyanatgruppen reagierende Gruppe im Molekülaufbau enthält, oder
c) eine Mischung von Verbindungen aus a) und/oder b) ist;
C.1 Verpressen der Mischung aus Schritt B.1 oder B.2 zu einem Holzwerkstoff.

13. Verfahren nach Anspruch 12 **dadurch gekennzeichnet, dass** der Holzwerkstoff mehrschichtig ist, wobei der mehrschichtige Holzwerkstoff mindestens eine Mittelschicht und mindestens zwei Deckschichten umfasst, wobei zunächst eine beleimte Mittelschicht durch die Schritte A.1 und B.1 oder A.1 und B.2 gemäß Anspruch 11 hergestellt wird und wobei zusätzlich beleimte Deckschichten hergestellt werden durch
A.0 Bereitstellen von lignocellulosehaltigem Material; und
B.0 Aufbringen eines aminoplastbasierten Bindemittels auf das lignocellulosehaltige Material aus Schritt A.0;
und wobei diese derart beleimten Mittel- und Deckschichten in Schritt C.2 zu dem mehrschichtigen Holzwerkstoff verpresst werden, sodass die Mittelschicht Teil des Innenbereichs des mehrschichtigen Holzwerkstoffs ist.

14. Verfahren nach Anspruch 12 oder 13, **dadurch gekennzeichnet, dass** die Bindemittelzusammensetzung in Schritt B.1 oder B.2 als Gemisch oder getrennt in Form ihrer Bindemittelbestandteile oder in Form von Einzelmischungen hieraus auf das lignocellulosehaltige Material aufgebracht wird.

15. Verfahren nach einem der Ansprüche 12 bis 14, **dadurch gekennzeichnet, dass** das lignocellulosehaltige Material ein holzenthaltendes Material ist oder aus Holz besteht, insbesondere wobei das lignocellulosehaltige Material ausgewählt ist aus der Gruppe bestehend aus Holzmehl, Holzfasern, Holzspänen, Holzstrands und Hackschnitzeln.

16. Verwendung von Ligninsulfonat in einer Bindemittelzusammensetzung als Emulgator und Reaktivphasenvermittler zwischen einem Polyisocyanat und einer isocyanatreaktiven Verbindung, wobei
- Emulgator bedeutet, dass dieser mindestens zwei nicht oder schlecht miteinander mischbare Phasen zu einer Dispersion vermengt und stabilisiert; und
- Reaktivphasenvermittler bedeutet, dass dieser durch kovalente Reaktionen an der Phasengrenzfläche für eine Kopplung und Kompatibilisierung, und damit einhergehend für eine bessere Phasendurchmischung, von mindestens zwei ursprünglich schlecht oder nicht miteinander mischbaren Phasen sorgt.

17. Verwendung einer Bindemittelzusammensetzung nach einem der Ansprüche 1 bis 5 als Flächenleim zur Applikation von Beschichtungsstoffen auf einem Untergrund, wobei entweder der Beschichtungsstoff oder der Untergrund Holz oder ein Holzwerkstoff ist.

18. Verwendung einer Bindemittelzusammensetzung nach einem der Ansprüche 1 bis 5 zur Reduktion von Formaldehydemissionen durch Holzwerkstoffe, insbesondere mehrschichtige Holzwerkstoffe.

## Claims

1. Polyisocyanate-based binder composition for manufacturing and/or finishing of wood-based materials with reduced formaldehyde emission comprising, in each case as solids weight relative to the total solids weight of the binder composition,
i) 30 to 95 wt. % polyisocyanate,
ii) 1 to 50 wt. % lignosulphonate, and
(iii) 1 to 50 wt. % isocyanate-reactive compound, which
a) is ammonia or an ammonia-releasing compound such as ammonium carbonate, or
b) comprises, in the molecular structure, at least one NH₂ group and one other group capable of reacting with isocyanate groups, or
c) is a mixture of compounds from a) and/or b).

2. The binder composition according to claim 1, **characterized in that** the isocyanate-reactive compound b) is selected from the group consisting of polyamines, aminoalcohols, amino acids, polypeptides, dicyandiamide, urea, thiourea and melamine.

3. Binder composition according to claim 1 or 2, **characterized in that** the polyisocyanate is an aromatic polyisocyanate, in particular selected from the group consisting of diphenylmethane diisocyanate (MDI) and polymeric diphenylmethane diisocyanate (PMDI).

4. Binder composition according to one of the preceding claims, **characterized in that** the isocyanate-reactive compound is water-soluble.

5. Binder composition according to one of the preceding claims, **characterized in that** the binder composition is present as a solution, essentially single-phase composition and/or dispersion.

6. Wood-based material comprising a reaction product of the binder composition according to any one of claims 1 to 5, wherein reaction product means the product of the crosslinking reaction.

7. Wood-based material according to claim 6, **characterized in that** the wood-based material is multi-layered and comprises at least one middle layer and at least two outer layers, wherein the reaction product of the binder composition specified in any one of claims 1 to 5 is contained in at least one middle layer of the multi-layered wood-based material.

8. Wood-based material according to claim 7, **characterized in that** at least one outer layer of the multilayer wood-based material contains a reaction product of an aminoplast-based binder composition.

9. Wood-based material according to claim 7 or 8, **characterized in that** the middle layer accounts for 5 to 85 wt. %, preferably 10 to 70 wt. % and more preferably 15 to 65 wt. % of the total weight of the wood-based material.

10. Wood-based material according to claim 9, **characterized in that** the multilayer wood-based material is a multilayer chipboard or fiberboard.

11. Wood-based material according to claim 6 to 10, **characterized in that** the wood-based material is selected from the group consisting of a chipboard, OSB board, fiberboard, a veneer-based wood-based material, a fiber molding or a chipboard molding.

12. Method of manufacturing a wood-based material, comprising at least the following steps:
A.1 Providing lignocellulose-containing material;
B.1 Applying a binder composition according to any one of claims 1 to 5 to the lignocellulose-containing material; or
B.2 Application of the following components of a binder composition to the lignocellulose-containing material, wherein the percentages by weight of the components i), ii) and iii) are relative to the dry weight of the lignocellulose-containing material from step A.1:
i) 1 to 10 wt. % polyisocyanate,
ii) 0.05 to 3 wt. % lignosulphonate, and
(iii) 0.05 to 3 wt. % of an isocyanate-reactive compound, which
a) is ammonia or an ammonia-releasing compound such as ammonium carbonate, or
b) comprises, in the molecular structure, at least one NH₂ group and one other group capable of reacting with isocyanate groups, or
c) is a mixture of compounds from a) and/or b);
C.1 Pressing the mixture from step B.1 or B.2 to form a wood-based material.

13. Method according to claim 12, **characterized in that** the wood-based material is multi-layered, wherein the multi-layered wood-based material comprises at least one middle layer and at least two outer layers, wherein first a coated middle layer is manufactured by steps A.1 and B.1 or A.1 and B.2 according to claim 11 and wherein additionally coated outer layers are manufactured by
A.0 Provision of lignocellulose-containing material; and
B.0 Application of an aminoplast-based binder onto the lignocellulose-containing material from step A.0;
and wherein the middle and outer layers coated in this way are pressed in step C.2 to form the multilayer wood-based material, so that the middle layer is part of the inner area of the multilayer wood-based material.

14. Process according to claim 12 or 13, **characterized in that** the binder composition is applied to the lignocellulose-containing material in step B.1 or B.2 as a mixture or separately in the form of its binder constituents or in the form of individual mixtures thereof.

15. The method according to any one of claims 12 to 14, **characterized in that** the lignocellulose-containing material is a wood-containing material or consists of wood, in particular wherein the lignocellulose-containing material is selected from the group consisting of wood dust, wood fibers, wood shavings, wood strands and wood chips.

16. Use of lignosulfonate in a binder composition as an emulsifier and reactive phase mediator between a polyisocyanate and an isocyanate-reactive compound, wherein
- Emulsifier means that this blends and stabilizes at least two immiscible or poorly miscible phases to form a dispersion; and
- Reactive phase mediator means that this, via covalent reactions at the phase interface, ensures a coupling and compatibilization, and thus concomitantly a better phase mixing, of at least two phases that are originally poorly miscible or immiscible.

17. Use of a binder composition according to any one of claims 1 to 5 as a surface adhesive for the application of coating materials to a substrate, wherein either the coating material or the substrate is wood or a wood-based material.

18. Use of a binder composition according to any one of claims 1 to 5 for reducing formaldehyde emissions by wood-based materials, in particular multilayer wood-based materials.

## Revendications

1. Composition de liant à base de polyisocyanate, pour la fabrication et/ou l'affinage de matériaux dérivés du bois avec une émission réduite de formaldéhyde, la composition contenant, chaque fois sous forme de poids de solides par rapport au poids total de solides de la composition de liant,
i) 30 à 95 % en poids de polyisocyanate,
ii) 1 à 50 % en poids de sulfonate de lignine, et
iii) 1 à 50 % en poids de composé réactif avec les isocyanates, lequel composé
a) est l'ammoniac ou un composé libérant l'ammoniac, notamment le carbonate d'ammoniac, ou
b) contient au moins un groupe NH₂ et un groupe supplémentaire réactif avec des groupes isocyanate dans la structure moléculaire, ou
c) est un mélange de composés de a) et/ou b).

2. Composition de liant selon la revendication 1, **caractérisée en ce que** le composé réactif avec les isocyanates b) est choisi dans le groupe constitué par des polyamines, aminoalcools, acides aminés, polypeptides, dicyandiamide, urée, thiourée et mélamine.

3. Composition de liant selon la revendication 1 ou 2,
**caractérisée en ce que** le polyisocyanate est un polyisocyanate aromatique, en particulier choisi dans le groupe constitué par le diphénylméthane diisocyanate (MDI) et le diphénylméthane diisocyanate polymérique (PMDI).

4. Composition de liant selon l'une des revendications précédentes, **caractérisée en ce que** le composé réactif avec les isocyanates est hydrosoluble.

5. Composition de liant selon l'une des revendications précédentes, **caractérisée en ce que** la composition de liant est présente sous la forme d'une solution, d'une composition essentiellement monophasique et/ou d'une dispersion.

6. Matériau dérivé du bois contenant un produit de réaction de la composition de liant mentionnée dans l'une des revendications 1 à 5, dans lequel le produit de réaction désigne le produit de la réaction de réticulation.

7. Matériau dérivé du bois selon la revendication 6, **caractérisé en ce que** le matériau dérivé du bois est multicouche et comprend au moins une couche intermédiaire ainsi qu'au moins deux couches de recouvrement, dans lequel le produit de réaction de la composition de liant mentionnée dans l'une des revendications 1 à 5 est contenu dans au moins une couche intermédiaire du matériau multicouche dérivé du bois.

8. Matériau dérivé du bois selon la revendication 7, **caractérisé en ce qu'**au moins une couche de recouvrement du matériau multicouche dérivé du bois contient un produit de réaction d'une composition de liant à base d'aminoplaste.

9. Matériau dérivé du bois selon la revendication 7 ou 8,
**caractérisé en ce que** la couche intermédiaire représente 5 à 85 % en poids, de préférence 10 à 70 % en poids et de manière particulièrement préférée 15 à 65 % en poids du poids total du matériau dérivé du bois.

10. Matériau dérivé du bois selon la revendication 9, **caractérisé en ce que** le matériau multicouche dérivé du bois est un panneau multicouche de particules ou de fibres.

11. Matériau dérivé du bois selon les revendications 6 à 10,
**caractérisé en ce que** le matériau dérivé du bois est choisi dans le groupe constitué par un panneau de particules, panneau à copeaux orientés, panneau de fibres, matériau dérivé du bois à base de placage, pièce moulée en fibres ou pièce moulée en aggloméré.

12. Procédé pour la fabrication d'un matériau dérivé du bois, comprenant au moins les étapes suivantes :
A.1 fourniture d'un matériau contenant de la lignocellulose ;
B.1 application d'une composition de liant selon l'une des revendications 1 à 5 sur le matériau contenant de la lignocellulose ; ou
B.2 application des composants suivants d'une composition de liant sur le matériau contenant de la lignocellulose, dans lequel les données en % en poids des composants i), ii) et iii) se rapportent au poids sec du matériau contenant de la lignocellulose de l'étape A.1 :
i) 1 à 10 % en poids de polyisocyanate,
ii) 0,05 à 3 % en poids de sulfonate de lignine, et
iii) 0,05 à 3 % en poids d'un composé réactif avec les isocyanates, lequel composé
a) est l'ammoniac ou un composé libérant l'ammoniac, notamment le carbonate d'ammoniac, ou
b) contient au moins un groupe NH₂ et un groupe supplémentaire réactif avec des groupes isocyanate dans la structure moléculaire, ou
c) est un mélange de composés de a) et/ou b) ;
C.1 compression du mélange de l'étape B.1 ou B.2 en un matériau dérivé du bois.

13. Procédé selon la revendication 12, **caractérisé en ce que** le matériau dérivé du bois est multicouche, dans lequel le matériau multicouche dérivé du bois comprend au moins une couche intermédiaire et au moins deux couches de recouvrement, une couche intermédiaire revêtue étant d'abord fabriquée par les étapes A.1 et B.1 ou A.1 et B.2 selon la revendication 11 et des couches de recouvrement revêtues étant en outre fabriquées par
A.0 fourniture d'un matériau contenant de la lignocellulose ; et
B.0 application d'un liant à base d'aminoplaste sur le matériau contenant de la lignocellulose de l'étape A.0 ;
et dans lequel ces couches intermédiaire et de recouvrement ainsi revêtues étant comprimées dans l'étape C.2 pour former le matériau en bois multicouche , de sorte que la couche intermédiaire fait partie de la zone intérieure du matériau multicouche dérivé du bois.

14. Procédé selon la revendication 12 ou 13, **caractérisé en ce que** la composition de liant est appliquée sur le matériau contenant de la lignocellulose à l'étape B.1 ou B.2 en mélange ou séparément sous forme de ses composants de liant ou sous forme de mélanges individuels de ceux-ci.

15. Procédé selon l'une des revendications 12 à 14, **caractérisé en ce que** le matériau contenant de la lignocellulose est un matériau contenant du bois ou est constitué de bois, en particulier dans lequel le matériau contenant de la lignocellulose est choisi dans le groupe constitué par la farine de bois, fibres de bois, copeaux de bois, plaques de bois et plaquettes de bois.

16. Utilisation de sulfonate de lignine dans une composition de liant comme émulsifiant et agent de phases réactif entre un polyisocyanate et un composé réactif avec les isocyanates, dans laquelle
- émulsifiant signifie que celui-ci mélange et stabilise au moins deux phases peu ou pas miscibles entre elles en une dispersion ; et
- agent de phases réactif signifie que celui-ci assure, par des réactions covalentes à la surface limite des phases, un couplage et une compatibilisation, et donc pour un meilleur mélange d'au moins deux phases originalement peu ou pas miscibles entre elles.

17. Utilisation d'une composition de liant selon l'une des revendications 1 à 5 comme colle de surface pour l'application de matériaux de revêtement sur un fond, dans laquelle le matériau de revêtement ou le fond est du bois ou un matériau dérivé du bois.

18. Utilisation d'une composition de liant selon l'une des revendications 1 à 5 pour réduire des émissions de formaldéhyde par des matériaux dérivés du bois, en particulier des matériaux multicouches dérivés du bois.
